# EUROPEAN PATENT APPLICATION

(11) **EP 4 696 613 A1**
(43) Date of publication of application: **18.02.2026**
(21) Application number: 24788718.5
(22) Date of filing: 09.04.2024
(51) Int. Cl.: B65D 81/18, A61J 3/00, B65D 77/04, C12M 1/00, G01N 1/04

(54) **ACCOMMODATION APPARATUS FOR FREEZING TARGET**

(30) Priority: 13.04.2023 JP 2023065661
(71) Applicant: Medipal Holdings Corporation, Tokyo 104-8461 (JP)
(72) Inventor: OHGANE, Shugo, Tokyo 104-0031 (JP)
(74) Representative: Stöckeler, Ferdinand
(86) International application number: PCT/JP2024/014385
(87) International publication number: WO 2024/214694

(57) **Abstract**

To increase the quantity of freezing targets stored in a storage space of a freezing container. A first accommodation unit 10 accommodating a first freezing target 91 includes a first female screw member 16a to which a part of a shaft member 80A is detachably coupled. A second accommodation unit 20 accommodating a second freezing target 92 includes a second female screw member 26a to which a part of the shaft member 80A is detachably coupled, and is arranged above the first accommodation unit 10 in a state of being stored in a freezing container 300. In a state where the second accommodation unit 20 is arranged above the first accommodation unit 10, the shaft member 80A is coupled to the first female screw member 16a to take out the first accommodation unit 10 and the second accommodation unit 20 collectively.

## Description

### Field

The present invention relates to an accommodation apparatus for a freezing target.

### Background

Some of medicines, specimens, various samples, and the like are stored and transported in a frozen state (hereinafter, "freezing target"). For example, a freezing container is used for storing and transporting the freezing target.

The freezing container is a heat insulating container including a storage space for storing a freezing target therein and a refrigerant chamber for storing a refrigerant such as liquid nitrogen therein. For example, the storage space extends downward from an opening portion provided at the upper end of the freezing container, and the refrigerant chamber is provided around the storage space. In the freezing container, it is necessary to ensure a sufficient volume of the refrigerant chamber, and therefore the volume of the storage space has to be smaller than the apparent size of the freezing container.

In view of such circumstances, there has been proposed an apparatus for storing a large number of freezing targets in a storage space of limited volume.

For example, a sample storage rack (an accommodation apparatus) described in Patent Literature 1 includes an accommodation unit formed by a metal box for accommodating a sample or the like therein, and a hanging member (a shaft member) constituted by a substantially L-shaped metal shaft whose lower end is joined to the accommodation unit and having a hook provided at the upper end.

In Patent Literature 1, four types of sample storage racks having different lengths of the hanging members are prepared. By using the four types of sample storage racks, four accommodation units can be stored in a storage space at intervals along the vertical direction. Further, a plurality of sets of the four accommodation units can be stored at intervals along the circumferential direction. Furthermore, a storage unit selected from among a plurality of storage units stored in the storage space can be taken out while the other storage units are stored.

An accommodation apparatus described in Patent Literature 2 includes a metal canister (an accommodation unit for accommodating a sample or the like) having a bottomed cylindrical shape with the upper end open, and a hanger hook (a shaft member) constituted by a metal shaft whose lower end portion is joined to the outer peripheral surface of the canister and having a hook provided at the upper end.

In Patent Literature 2, two types of accommodation apparatuses having different lengths of the hanger hooks are prepared. By using the two types of accommodation apparatuses, two canisters can be stored in a storage space at intervals along the vertical direction. Further, a plurality of sets of the two canisters can be stored at intervals along the circumferential direction. Furthermore, a canister selected from among the canisters stored in the storage space can be taken out while the other canisters are stored.

In the accommodation apparatuses described in Patent Literatures 1 and 2, since the accommodation units can be stored in the storage space to be spaced apart from each other in the vertical direction, a large number of freezing targets can be stored in the storage space.

However, to take out a specific accommodation unit from among the accommodation units, it has been necessary to ensure a passage for taking-out in such a manner that the other accommodation units left in the storage space do not obstruct the taking-out of the specific accommodation unit.

Specifically, to take out a lower accommodation unit, the lower accommodation unit is shifted in the lateral direction once and is then pulled up. Therefore, it has been necessary to ensure a passage (a space or a dead space) for such a movement in advance. Accordingly, there has been a problem that, since a dead space corresponding to such a passage is formed in the storage space, a space for storing the freezing target is reduced.

### Citation List

### Patent Literatures

Patent Literature 1: Japanese Patent No. 6951621
Patent Literature 2: Japanese Patent Application Laid-open No. 2018-88992

### Summary

### Technical Problem

As described above, the conventional accommodation apparatuses have a problem that a space for storing freezing targets is reduced.

The present invention has been achieved in view of the above circumstances, and an object of the present invention is to increase the quantity of freezing targets that can be stored in a storage space of limited volume as much as possible.

### Solution to Problem

In order to solve the above problems, the present invention provides an accommodation apparatus for a freezing target, comprising an accommodation unit accommodating a freezing target and a shaft member detachably coupled to the accommodation unit, and having a configuration in which, in a state where the shaft member is coupled to the accommodation unit stored in a freezing container, the accommodation unit is put into and taken out from the freezing container by using the shaft member, wherein the accommodation unit includes: a first accommodation unit accommodating a first freezing target and provided with a first coupled portion to which a part of the shaft member is detachably coupled; and a second accommodation unit accommodating a second freezing target, provided with a second coupled portion to which a part of the shaft member is detachably coupled, and arranged above the first accommodation unit in a state of being stored in the freezing container, and the accommodation apparatus has a configuration in which, in a state where the second accommodation unit is arranged above the first accommodation unit, the first accommodation unit and the second accommodation unit are taken out collectively by coupling the shaft member to the first coupled portion.

### Advantageous Effects of Invention

According to the present invention, it is possible to increase the quantity of freezing targets that can be stored in a storage space.

### Brief Description of Drawings

[FIG. 1] FIG. 1 is a partial sectional view of an accommodation apparatus according to a first embodiment and a freezing container, as viewed from a front side.
[FIG. 2] FIG. 2 is a perspective view of a first accommodation unit located at a first stage (lowermost stage).
[FIG. 3] FIG. 3 is a perspective view of a second accommodation unit located at a second stage (middle stage).
[FIG. 4] FIG. 4 is a perspective view of a third accommodation unit located at a third stage (middle stage).
[FIG. 5] FIG. 5 is a perspective view of a fourth accommodation unit located at a fourth stage (uppermost stage).
[FIG. 6] FIG. 6 is a perspective view illustrating a stacked state of respective accommodation units.
[FIG. 7] FIG. 7 is an explanatory diagram of a shaft member.
[FIGS. 8] FIG. 8(a) is a front view of a pedestal, FIG. 8(b) is a left side view of the pedestal, FIG. 8(c) is a plan view of the pedestal, and FIG. 8(d) is a perspective view of the pedestal.
[FIGS. 9] FIG. 9(a) is a plan view of a guide member, and FIG. 9(b) is a front view of the guide member.
[FIG. 10] FIG. 10 is a plan view of a freezing container with the guide member attached thereto.
[FIG. 11] FIG. 11 is an explanatory diagram of a procedure of storing the pedestal in a storage space of the freezing container.
[FIG. 12] FIG. 12 is an explanatory diagram of a procedure of storing an accommodation apparatus with freezing targets accommodated therein in the storage space of the freezing container.
[FIG. 13] FIG. 13 is an explanatory diagram of a procedure when some freezing targets are taken out from among a plurality of freezing targets stored in the storage space.
[FIG. 14] FIG. 14 is an explanatory diagram of a procedure when all the freezing targets stored in the storage space are taken out.
[FIGS. 15] FIGS. 15 are explanatory diagrams of an accommodation apparatus according to a second embodiment, where FIG. 15(a) is a perspective view of a first accommodation unit at a first stage (lowermost stage), FIG. 15(b) is a perspective view of a second accommodation unit at a second stage (middle stage), FIG. 15(c) is a cross-sectional view of each of female screw members, and FIG. 15(d) is a cross-sectional view for explaining a state where a male screw portion of a shaft member and a second female screw member are screwed together.
[FIGS. 16] FIGS. 16 are explanatory diagrams of an accommodation apparatus according to a third embodiment, where FIG. 16(a) is a perspective view of an accommodation unit at a first stage (lowermost stage), FIG. 16(b) is a perspective view of an accommodation unit at a second or third stage (middle stage), and FIG. 16(c) is a perspective view of an accommodation unit at a fourth stage (uppermost state).
[FIG. 17] FIG. 17 is an explanatory diagram of a method of using the accommodation apparatus according to the third embodiment.
[FIG. 18] FIG. 18 is an explanatory diagram of an accommodation apparatus according to a fourth embodiment.
[FIG. 19] FIG. 19 is an explanatory diagram of an accommodation apparatus according to a fifth embodiment.
[FIG. 20] FIG. 20 is an explanatory diagram of an accommodation apparatus according to a sixth embodiment.

### Description of Embodiments

### <First embodiment>

Embodiments of the present invention will be described below in detail with reference to the drawings. Constituent elements, types, combinations, shapes, and relative arrangements described in the embodiments are merely explanatory examples, and are not intended to limit the scope of the present invention solely thereto unless otherwise specified.

### <Outline of first embodiment>

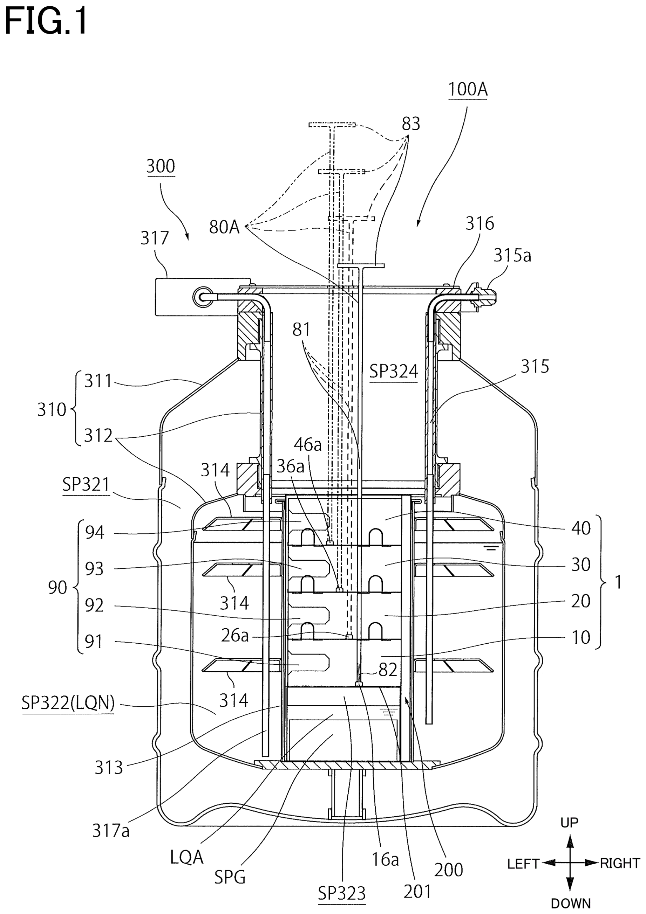

FIG. 1 is a front view of an accommodation apparatus 100A according to a first embodiment and a freezing container 300. First, the outline of the accommodation apparatus 100A according to the first embodiment is described with reference to FIG. 1.

The accommodation apparatus 100A includes an accommodation unit group 1 including accommodation units 10 to 40 respectively accommodating freezing targets 91 to 94 constituting a freezing target group 90 in such a manner that the freezing targets 91 to 94 can be taken out freely. For example, the accommodation unit group 1 includes the first accommodation unit 10 placed on a pedestal 200, the second accommodation unit 20 arranged above the first accommodation unit 10, the third accommodation unit 30 arranged above the second accommodation unit 20, and the fourth accommodation unit 40 arranged above the third accommodation unit 30. Here, "arranged above" means that the accommodation units 10 to 40 are arranged in a state where they can be pulled up collectively. Therefore, "arranged above" includes a state where the upper accommodation unit 20, 30, or 40 is directly placed on the lower accommodation unit 10, 20, or 30, and a state where the upper and lower accommodation units are arranged to be spaced apart from each other in the vertical direction (for example, a state where another member such as a cushioning member is interposed between the upper and lower accommodation units).

The accommodation units 10 to 40 accommodate the freezing targets 91 to 94, respectively, and are stored in a storage space SP323 provided inside the freezing container 300. In the present embodiment, the freezing targets 91 to 94 are a plurality of vials each stored in a box, for example, but are not limited thereto.

The accommodation apparatus 100A includes one shaft member 80A to be coupled to each of the accommodation units 10 to 40 individually and detachably. In the accommodation units 10 to 40 (in this example, at the front lower ends), female screw members (coupled portions) 16a to 46a to which a male screw portion 82 (a coupling portion) provided in the shaft member 80A (in this example, the lower end) is to be coupled are provided, respectively.

Specifically, the first female screw member 16a is provided at the front lower end of the first accommodation unit 10, and the second female screw member 26a is provided at the front lower end of the second accommodation unit 20. Similarly, the third female screw member 36a is provided at the front lower end of the third accommodation unit 30, and the fourth female screw member 46a is provided at the front lower end of the fourth accommodation unit 40.

The female screw members 16a to 46a are provided at predetermined intervals along the right-left direction (circumferential direction) as viewed from above.

Each of the female screw members 16a to 46a is configured in such a manner that their positions in the right-left direction and in the circumferential direction do not coincide with (interfere with) each other. Therefore, even in a state where the accommodation units 10 to 40 are stacked as illustrated in FIG. 1, each of the female screw members 16a to 46a can be coupled to the male screw portion 82 of the shaft member 80A individually and selectively. Hence, an insertion opening (described later) through which the shaft member 80A is inserted and pulled up is provided above each of the female screw members 16a to 46a in each of the accommodation units 10 to 40.

In a case of taking out each of the accommodation units 10 to 40 (each of the freezing targets 91 to 94) stored in the storage space SP323, the male screw portion 82 of the shaft member 80A is coupled to the female screw member 16a, 26a, 36a, or 46a of the accommodation unit 10, 20, 30, or 40 to be taken out, and thereafter the shaft member 80A is moved upward. With the upward movement of the shaft member 80A, the corresponding accommodation unit 10, 20, 30, or 40 is moved upward and taken out from the storage space SP323.

Since the accommodation units 10 to 40 are arranged to be stacked, only the uppermost accommodation unit 40 can be taken out alone. However, the accommodation units 10, 20, and 30 located below cannot be taken out alone.

For example, as indicated with the solid line in FIG. 1, when the male screw portion 82 of the shaft member 80A is coupled to the first female screw member 16a and then the shaft member 80A is pulled up, the four accommodation units 10 to 40 can be taken out collectively. As indicated with the dotted line in FIG. 1, when the male screw portion 82 is coupled to the second female screw member 26a and then the shaft member 80A is pulled up, the three accommodation units 20 to 40 can be taken out collectively while the first accommodation unit 10 is left in the storage space SP323. As indicated with the long dashed short dashed line in FIG. 1, when the male screw portion 82 is coupled to the third female screw member 36a and then the shaft member 80A is pulled up, the two accommodation units 30 and 40 can be taken out while the two accommodation units 10 and 20 are left in the storage space SP323. As indicated with the long dashed double-short dashed line in FIG. 1, when the male screw portion 82 is coupled to the fourth female screw member 46a and then the shaft member 80A is pulled up, only the fourth accommodation unit 40 can be taken out while the three accommodation units 10 to 30 are left in the storage space SP323.

As described above, by selecting the female screw member 16a, 26a, 36a, or 46a to which the male screw portion 82 of the shaft member 80A is coupled, it is possible to select the accommodation unit 10, 20, 30, or 40 to be taken out from the storage space SP323.

In the accommodation apparatus 100A according to the first embodiment, since the accommodation units 20 to 40 above the selected accommodation units 10 to 30 can also be pulled up collectively, it is unnecessary to ensure a passage for allowing the selected accommodation units 10 to 30 to pass therethrough above the selected accommodation units 10 to 30. Consequently, the size of each of the accommodation units 10 to 40 stored in the storage space SP323 can be maximized in accordance with the size of the storage space SP323 or the like, so that the quantity of the freezing targets 91 to 94 that can be stored can be increased as compared with a case of using the conventional accommodation apparatus disclosed in Patent Literature 1 or 2.

### <Freezing container 300>

Prior to the description of the accommodation apparatus 100A according to the first embodiment, the freezing container 300 in which the accommodation unit group 1 of the accommodation apparatus 100A is accommodated is described.

As illustrated in FIG. 1, the freezing container 300 includes a container body 310 having the storage space SP323 therein. The container body 310 has a bottle shape with a circular cross section and a diameter of an upper end part smaller than a diameter of other parts. The container body 310 has a double-wall structure including an outer peripheral wall 311 and an inner peripheral wall 312. The space between the outer peripheral wall 311 and the inner peripheral wall 312 is sealed and forms a sealed space SP321.

The sealed space SP321 is decompressed and forms a heat insulation structure with poor heat transfer between the outer peripheral wall 311 and the inner peripheral wall 312.

An inner space is formed inside the inner peripheral wall 312. A partition wall 313 having a square cylindrical shape is provided in a lower half of the inner space. The partition wall 313 liquid-tightly partitions the lower half of the inner space into a refrigerant chamber SP322 on the outer peripheral side of the partition wall 313 and the storage space SP323 on the inner peripheral side of the partition wall 313.

The partition wall 313 is made of a high-heat transfer material that can be used even at extremely low temperatures. Although the partition wall 313 is formed by a stainless steel plate in the present embodiment, it may be made of another material.

The refrigerant chamber SP322 is a space in which a refrigerant LQN such as liquid nitrogen is stored. A wave dissipating plate 314 extending laterally from the partition wall 313 is provided on the outer peripheral surface of the partition wall 313. The wave dissipating plate 314 is a member for reducing waving of the refrigerant LQN during movement of the freezing container 300 and is provided in multiple stages (for example, three stages) at intervals along the vertical direction.

A refrigerant supply pipe 315 for supplying the refrigerant LQN from outside of the container body 310 is arranged in the refrigerant chamber SP322. The upper part of the refrigerant supply pipe 315 is bent toward the side, and the distal end of the refrigerant supply pipe 315 protrudes outward from an opening portion 316 provided in the upper end part of the container body 310. The protruding part of the refrigerant supply pipe 315 is provided with a coupling fitting 315a to be coupled to a pipe from a refrigerant supply portion (not illustrated) when the refrigerant LQN is supplied to the refrigerant chamber SP322.

Further, in the refrigerant chamber SP322, a detector 317a of a liquid level gauge 317 that detects the liquid level height of the refrigerant LQN (a storage amount of the refrigerant LQN) in the refrigerant chamber SP322 is arranged.

The storage space SP323 is a space in which the accommodation unit group 1 is to be stored, and is cooled to an extremely low temperature by the refrigerant LQN stored in the refrigerant chamber SP322. An upper space SP324 is provided between the storage space SP323 and the opening portion 316 of the freezing container 300. The upper space SP324 is a space into which a lid (not illustrated) included in the freezing container 300 is to fit.

In the storage space SP323, the pedestal 200 and a liquid absorbent SPG are also stored, in addition to the accommodation unit group 1. The pedestal 200 is a member for preventing contact between each of the accommodation units 10, 20, 30, and 40 and liquid air LQA and includes a seat plate 201 on which the first accommodation unit 10 is to be placed. The pedestal 200 will be described later. The liquid absorbent SPG is formed by a porous body that absorbs the liquid air LQA in the refrigerant chamber SP322. By causing the liquid absorbent SPG to absorb the liquid air LQA, the accommodation unit group 1 is less likely to come into contact with the liquid air LQA.

### <Accommodating unit group 1>

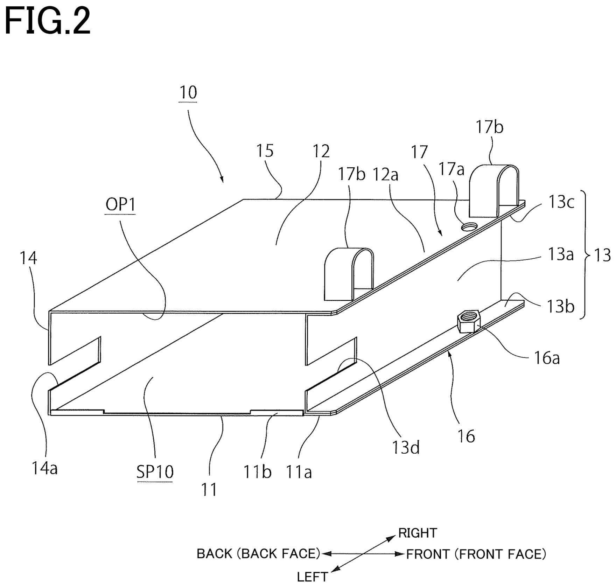

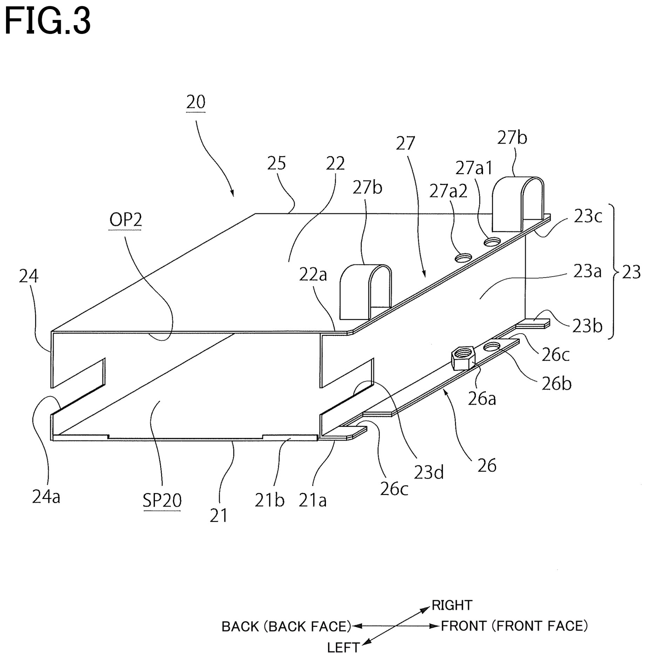

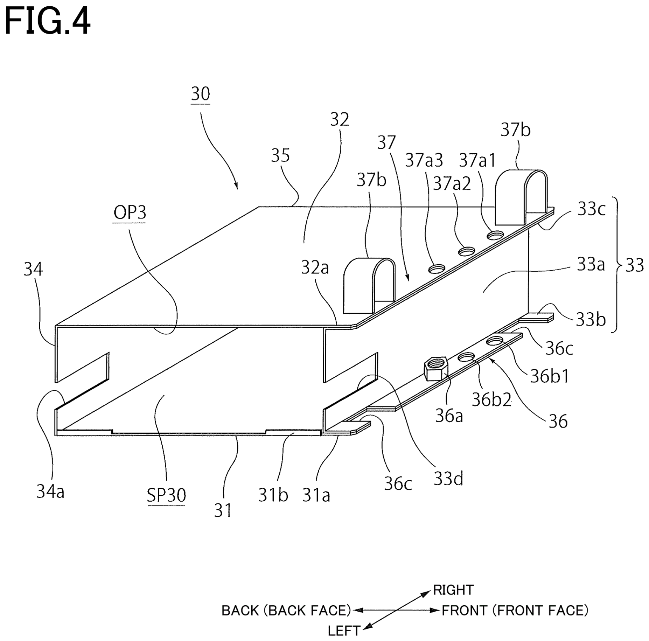

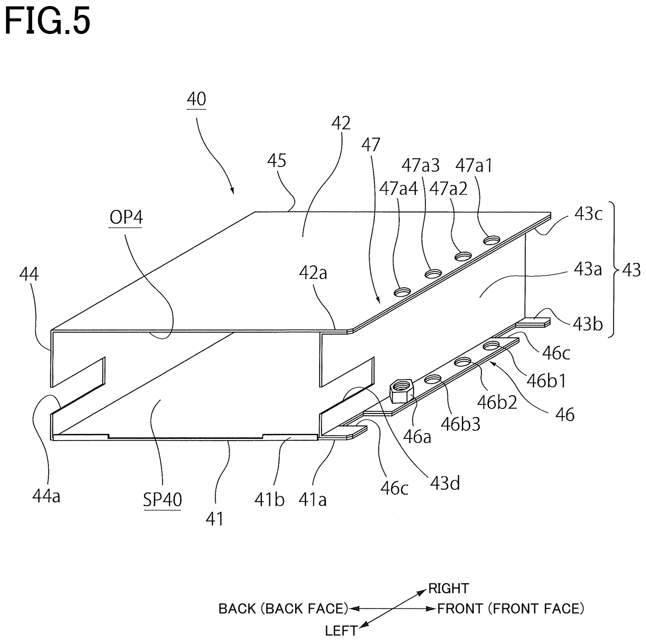

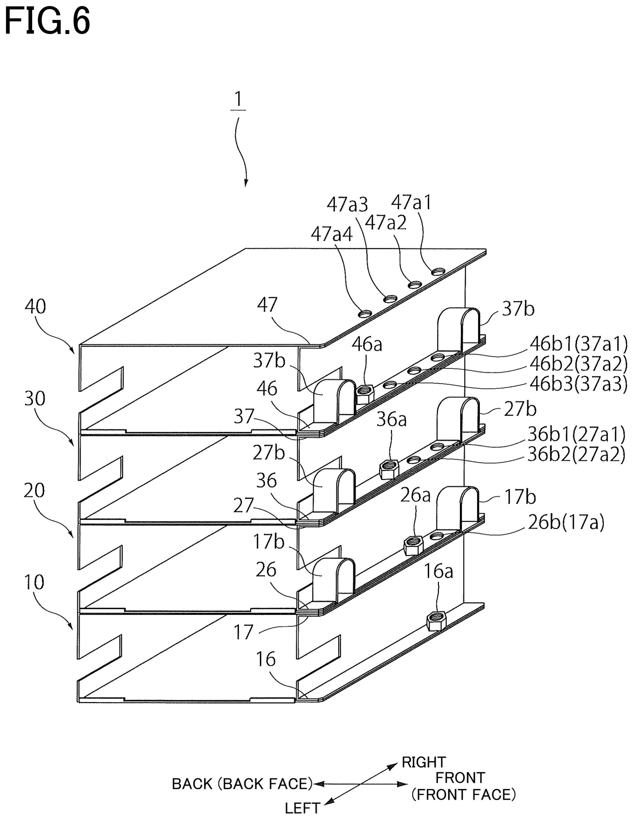

Next, the accommodation unit group 1 (the accommodation units 10, 20, 30, and 40) included in the accommodation apparatus 100A is described. FIG. 2 is a perspective view of the first accommodation unit 10 located at the first stage (lowermost stage), FIG. 3 is a perspective view of the second accommodation unit 20 located at the second stage (middle stage), FIG. 4 is a perspective view of the third accommodation unit 30 located at the third stage (middle stage), FIG. 5 is a perspective view of the fourth accommodation unit 40 located at the fourth stage (uppermost stage), and FIG. 6 is a perspective view illustrating the stacked state of the accommodation unit group 1.

In the following embodiment, the second accommodation unit 20 is placed on the first accommodation unit 10, the third accommodation unit 30 is placed on the second accommodation unit 20, and the fourth accommodation unit 40 is placed on the third accommodation unit 30. However, the configuration of them is not limited to this configuration. It suffices that the accommodation units 10 to 40 are arranged in a state where they can be pulled up collectively. Therefore, the accommodation units 10 to 40 may be spaced apart from each other in the vertical direction with another member such as a sheet-type cushioning material interposed between the accommodation units 10 to 40 located above and below.

### <First accommodation unit 10>

The first accommodation unit 10 illustrated in FIG. 2 is a box-shaped member having a bottom plate 11, a top plate 12, a front plate 13, a back plate 14, and a right side plate 15. The internal space of the first accommodation unit 10 is a first accommodation space SP10 that accommodates the first freezing target 91 therein (see FIG. 1). An opening on the left side is an entrance/exit OP1 for the first freezing target 91. For each of the plates 11, 12, 13, 14, and 15 constituting the first accommodation unit 10, a material having resistance to extremely low temperature, for example, a stainless steel plate is used.

The front plate 13 has a front plate body 13a provided across the bottom plate 11 and the top plate 12, a lower end part 13b projecting forward from the lower end edge of the front plate body 13a, and an upper end part 13c projecting forward from the upper end edge of the front plate body 13a.

A front end part 11a of the bottom plate 11 and a front end part 12a of the top plate 12 project forward from the front plate body 13a. The front end part 11a of the bottom plate 11 and the lower end part 13b of the front plate 13 are joined to each other to form a lower protruding piece 16, and the front end part 12a of the top plate 12 and the upper end part 13c of the front plate 13 are joined to each other to form an upper protruding piece 17.

The first female screw member 16a is provided on the upper surface of the lower protruding piece 16 at a position on the right side when viewed from the front.
The first female screw member 16a is a member having a female screw formed on the inner periphery thereof, the female screw being capable of being coupled to the male screw of the shaft member 80A (the male screw portion 82).

The first female screw member 16a of the present embodiment is a nut made of stainless steel, and is fixed to the upper surface of the lower protruding piece 16 by welding. The method of fixing the first female screw member 16a is not limited to welding, as long as the fixed state can be maintained at extremely low temperatures.

A first upper insertion opening 17a is provided in the upper protruding piece 17 at a position directly above the first female screw member 16a. The first upper insertion opening 17a is provided to have a size that allows a shaft body 81 (the male screw portion 82) of the shaft member 80A to be inserted therethrough. Therefore, the male screw portion 82 of the shaft body 81 can be coupled to the first female screw member 16a through the first upper insertion opening 17a.

A pair of first positioning protrusions 17b are provided on the upper surface of the upper protruding piece 17 on the left and right sides. The first positioning protrusions 17b are provided for restricting the position of the second accommodation unit 20. As described later, a pair of second positioning voids 26c are provided in a lower protruding piece 26 of the second accommodation unit 20, into which the pair of first positioning protrusions 17b fit (see FIG. 3).

The first positioning protrusions 17b are each formed by a stainless steel plate curved in an arch shape (inverted U-shape), for example, and are fixed to the upper surface of the upper protruding piece 17 by welding. The method of fixing the upper protruding piece 17 is not limited to welding, as long as the fixed state can be maintained at extremely low temperatures.

A front notch 13d is provided at the left end of the front plate body 13a, and a rear notch 14a is provided at the left end of the back plate 14. These notches 13d and 14a are provided for the purpose of, for example, making it possible to visually recognize whether the first freezing target 91 is accommodated in the first accommodation space SP10 from outside or facilitating taking-out of the first freezing target 91 from the first accommodation space SP10.

Fall prevention protrusions 11b are provided on the left side edge of the bottom plate 11 (the lower end edge of the entrance/exit OP1). The fall prevention protrusions 11b are provided for the purpose of preventing falling of the first freezing target 91 accommodated in the first accommodation space SP10. Even if the first accommodation unit 10 is inclined obliquely downward on the left side, the first freezing target 91 is locked to the fall prevention protrusions 11b and stays in the first accommodation space SP10.

### <Second accommodation unit 20>

The second accommodation unit 20 illustrated in FIG. 3 has a basic configuration in common with the aforementioned first accommodation unit 10. That is, the second accommodation unit 20 is also a box-shaped member having a bottom plate 21, a top plate 22, a front plate 23, a back plate 24, and a right side plate 25 and having an opening OP2 on the left side. The internal space of the second accommodation unit 20 is a second accommodation space SP20 that accommodates the second freezing target 92 therein (see FIG. 1). A front notch 23d and a rear notch 24a are provided at the left end of a front plate body 23a and at the left end of the back plate 24, respectively, and fall prevention protrusions 21b are provided on the left side edge of the bottom plate 21. Each part of the second accommodation unit 20 is also formed by a member that is not damaged (for example, corroded) even at extremely low temperatures, for example, a stainless steel material.

A front end part 21a of the bottom plate 21 and a lower end part 23b of the front plate 23 form the lower protruding piece 26, and a front end part 22a of the top plate 22 and an upper end part 23c of the front plate 23 form an upper protruding piece 27. The pair of second positioning voids 26c are provided in the left and right parts of the lower protruding piece 26. The second positioning voids 26c are formed by, for example, cutting out the lower protruding piece 26 in a square shape, and the first positioning protrusions 17b of the first accommodation unit 10 fit thereinto when the second accommodation unit 20 is placed on the first accommodation unit 10.

A second lower insertion opening 26b is provided in the right part of the lower protruding piece 26 on the left side of the right second positioning void 26c. The second lower insertion opening 26b is a through hole having a size that allows the shaft body 81 to be inserted therethrough. The position of the second lower insertion opening 26b is aligned with the position of the first upper insertion opening 17a of the first accommodation unit 10 in a state where the second accommodation unit 20 is placed on the first accommodation unit 10.

The second female screw member 26a is provided on the upper surface of the lower protruding piece 26 on the left side of the second lower insertion opening 26b. The second female screw member 26a is a member having a female screw formed on the inner periphery thereof, the female screw being capable of being coupled to the male screw of the shaft member 80A. The second female screw member 26a of the present embodiment is a nut made of stainless steel, similarly to the first female screw member 16a, and is fixed to the upper surface of the lower protruding piece 26 by, for example, welding.

A pair of second positioning protrusions 27b are provided on the upper surface of the upper protruding piece 27 on the left and right sides. The second positioning protrusions 27b are provided for restricting the position of the third accommodation unit 30. As described later, a pair of third positioning voids 36c are provided in a lower protruding piece 36 of the third accommodation unit 30, into which the pair of second positioning protrusions 27b fit (see FIG. 4).

Similarly to the first positioning protrusions 17b, the second positioning protrusions 27b are each formed by a stainless steel plate curved in an arch shape, and are fixed to the upper protruding piece 27 by welding or the like.

Two second upper insertion openings 27a1 and 27a2 are provided in the upper protruding piece 27 at a position directly above the second lower insertion opening 26b and at a position directly above the second female screw member 26a. Each of the second upper insertion opening 27a1 and 27a2 is a through hole having a size that allows the shaft body 81 to be inserted therethrough.

The shaft member 80A can be coupled to the second female screw member 26a through the second upper insertion opening 27a2 provided directly above the second female screw member 26a. Further, the shaft member 80A can be coupled to the first female screw member 16a through the other second upper insertion opening 27a1, the second lower insertion opening 26b, and the first upper insertion opening 17a in a state where the second accommodation unit 20 is placed on the first accommodation unit 10.

### <Third accommodation unit 30>

The third accommodation unit 30 illustrated in FIG. 4 has a basic configuration in common with the first accommodation unit 10 and the second accommodation unit 20 described before. That is, the third accommodation unit 30B is also a box-shaped member having a bottom plate 31, a top plate 32, a front plate 33, a back plate 34, and a right side plate 35 and having an opening OP3 on the left side. The internal space of the third accommodation unit 30 is a third accommodation space SP30 that accommodates the third freezing target 93 therein (see FIG. 1). A front notch 33d and a rear notch 34a are provided at the left end of a front plate body 33a and at the left end of the back plate 34, respectively, and fall prevention protrusions 31b are provided on the left side edge of the bottom plate 31. Each part of the third accommodation unit 30 is also formed by a member that is not damaged even at extremely low temperatures, for example, a stainless steel material.

A front end part 31a of the bottom plate 31 and a lower end part 33b of the front plate 33 form the lower protruding piece 36, and a front end part 32a of the top plate 32 and an upper end part 33c of the front plate 33 form an upper protruding piece 37. The pair of third positioning voids 36c are provided in the left and right parts of the lower protruding piece 36. The third positioning voids 36c are formed by, for example, cutting out the lower protruding piece 36 in a square shape, and the second positioning protrusions 27b of the second accommodation unit 20 fit thereinto when the third accommodation unit 30 is placed on the second accommodation unit 20.

Two third lower insertion openings 36b1 and 36b2 are provided to be spaced apart from each other in the right part of the lower protruding piece 36 on the left side of the right third positioning void 36c. Each of the third lower insertion openings 36b1 and 36b2 is a through hole through which the shaft body 81 can be inserted. The positions of third lower insertion openings 36b1 and 36b2 are respectively aligned with the positions of the second upper insertion openings 27a1 and 27a2 of the second accommodation unit 20 in a state where the third accommodation unit 30 is placed on the second accommodation unit 20.

The third female screw member 36a is provided on the upper surface of the lower protruding piece 36 on the left side of the left third lower insertion opening 36b2. The third female screw member 36a is a member having a female screw formed on the inner periphery thereof, the female screw being capable of being coupled to the male screw of the shaft member 80A. The third female screw member 36a of the present embodiment is a nut made of stainless steel, similarly to the first female screw member 16a and the second female screw member 26a, and is fixed to the upper surface of the lower protruding piece 36 by welding.

A pair of third positioning protrusions 37b are provided on the upper surface of the upper protruding piece 37 on the left and right sides. The third positioning protrusions 37b are provided for restricting the position of the fourth accommodation unit 40. As described later, a pair of fourth positioning voids 46c are provided in a lower protruding piece 46 of the fourth accommodation unit 40, into which the pair of third positioning protrusions 37b fit (see FIG. 5).

Similarly to the first positioning protrusions 17b and the second positioning protrusions 27b, the third positioning protrusions 37b are each formed by a stainless steel plate curved in an arch shape, and are fixed to the upper protruding piece 37 by welding or the like.

Three third upper insertion openings 37a1, 37a2, and 37a3 are provided in the upper protruding piece 37 at positions directly above the third lower insertion openings 36b1 and 36b2 and at a position directly above the third female screw member 36a. Each of the third upper insertion opening 37a1, 37a2, and 37a3 is a through hole having a size that allows the shaft body 81 to be inserted therethrough.

The shaft member 80A can be coupled to the third female screw member 36a through the third upper insertion opening 37a3 provided directly above the third female screw member 36a. Further, the shaft member 80A can be coupled to the second female screw member 26a through the central third upper insertion opening 37a2 in the right-left direction, the third lower insertion opening 36b2 on the right side of the third female screw member 36a, and the second upper insertion opening 27a2 provided directly above the second female screw member 26a in a state where the third accommodation unit 30 is placed on the second accommodation unit 20. Furthermore, the shaft member 80A can be coupled to the first female screw member 16a through the right third upper insertion opening 37a1, the right third lower insertion opening 36b1, the right second upper insertion opening 27a1, the second lower insertion opening 26b, and the first upper insertion opening 17a in a state where the third accommodation unit 30 is placed on the second accommodation unit 20 and the second accommodation unit 20 is placed on the first accommodation unit 10.

### <Fourth accommodation unit 40>

The fourth accommodation unit 40 illustrated in FIG. 5 has a basic configuration in common with the aforementioned accommodation units 10 to 30. That is, the fourth accommodation unit 40 is also a box-shaped member having a bottom plate 41, a top plate 42, a front plate 43, a back plate 44, and a right side plate 45 and having an opening OP4 on the left side. The internal space of the fourth accommodation unit 40 is a fourth accommodation space SP40 that accommodates the fourth freezing target 94 therein (see FIG. 1). A front notch 43d and a rear notch 44a are provided at the left end of a front plate body 43a and at the left end of the back plate 44, respectively, and fall prevention protrusions 41b are provided on the left side edge of the bottom plate 41. Each part of the fourth accommodation unit 40 is also formed by a member that is not damaged even at extremely low temperatures, for example, a stainless steel material.

A front end part 41a of the bottom plate 41 and a lower end part 43b of the front plate 43 form the lower protruding piece 46, and a front end part 42a of the top plate 42 and an upper end part 43c of the front plate 43 form an upper protruding piece 47. The pair of fourth positioning voids 46c are provided in the left and right parts of the lower protruding piece 46. The fourth positioning voids 46c are formed by, for example, cutting out the lower protruding piece 46 in a square shape, and the third positioning protrusions 37b of the third accommodation unit 30 fit thereinto when the fourth accommodation unit 40 is placed on the third accommodation unit 30.

Three fourth lower insertion openings 46b1, 46b2, and 46b3 are provided to be spaced apart from each other in the right part of the lower protruding piece 46 on the left side of the right fourth positioning void 46c. Each of the fourth lower insertion opening 46b1, 46b2, and 46b3 is a through hole having a size that allows the shaft body 81 to be inserted therethrough. The positions of the fourth lower insertion openings 46b1, 46b2, and 46b3 are aligned respectively with the positions of the third upper insertion openings 37a1, 37a2, and 37a3 of the third accommodation unit 30 in a state where the fourth accommodation unit 40 is placed on the third accommodation unit 30.

The fourth female screw member 46a is provided on the upper surface of the lower protruding piece 46 on the left side of the left fourth lower insertion opening 46b3. The fourth female screw member 46a is a member having a female screw formed on the inner periphery thereof, the female screw being capable of being coupled to the male screw of the shaft member 80A. The fourth female screw member 46a of the present embodiment is a nut made of stainless steel, similarly to the aforementioned female screw members, and is fixed to the upper surface of the lower protruding piece 46 by welding.

Four fourth upper insertion openings 47a1, 47a2, 47a3, and 47a4 are provided in the upper protruding piece 47 at positions directly above the fourth lower insertion openings 46b1, 46b2, and 46b3 and at a position directly above the fourth female screw member 46a, respectively. Each of the fourth upper insertion opening 47al, 47a2, 47a3, and 47a4 is a through hole having a size that allows the shaft body 81 to be inserted therethrough.

As illustrated in FIG. 6, in a state where the accommodation units 10, 20, 30, and 40 of the accommodation unit group 1 are stacked, the shaft member 80A can be coupled to the fourth female screw member 46a through the fourth upper insertion opening 47a4 provided directly above the fourth female screw member 46a. Further, the shaft member 80A can be coupled to the third female screw member 36a through the second fourth upper insertion opening 47a3 from the left, the fourth lower insertion opening 46b3 on the right side of the fourth female screw member 46a, and the third upper insertion opening 37a3 provided directly above the third female screw member 36a.

Similarly, the shaft member 80A can be coupled to the second female screw member 26a through the third fourth upper insertion opening 47a2 from the left, the central fourth lower insertion opening 46b2 in the right-left direction, the central third upper insertion opening 37a2 in the right-left direction, the third lower insertion opening 36b2 on the right side of the third female screw member 36a, and the second upper insertion opening 27a2 provided directly above the second female screw member 26a. Further, the shaft member 80A can be coupled to the first female screw member 16a through the rightmost fourth upper insertion opening 47a1, the right fourth lower insertion opening 46b1, the right third upper insertion opening 37a1, the right third lower insertion opening 36b1, the right second upper insertion opening 27a1, the second lower insertion opening 26b on the right side of the second female screw member 26a, and the first upper insertion opening 17a provided directly above the first female screw member 16a.

### <Shaft member 80A>

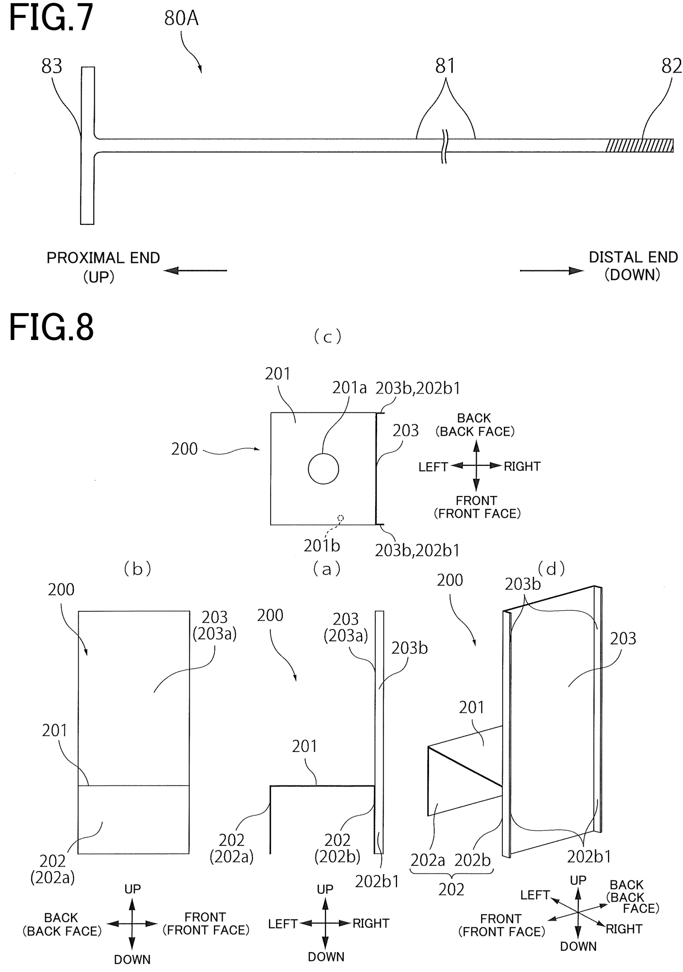

FIG. 7 is an explanatory diagram of the shaft member 80A. As illustrated in FIG. 7, the shaft member 80A includes the shaft body 81 in the form of a bar, the male screw portion 82 provided at the distal end of the shaft body 81, and a handle 83 provided at the proximal end of the shaft body 81.

In the present embodiment, the shaft body 81 is constituted by a round bar made of stainless steel and having rigidity capable of collectively lifting the four accommodation units 10, 20, 30, and 40 respectively accommodating the freezing targets 91, 92, 93, and 94. A male screw capable of being coupled to each of the female screw members 16a, 26a, 36a, and 46a described before is formed in the outer peripheral surface of the male screw portion 82. The handle 83 is a portion to be gripped when the shaft body 81 is rotated about the shaft center and when the accommodating unit group 1 accommodating the freezing target group 90 is put into and taken out from the storage space SP323. The handle 83 of the present embodiment is a so-called T-shaped handle, and is provided by fixing a bar-shaped member to the proximal end of the shaft body 81 in a direction perpendicular to the axial direction of the shaft body 81 by welding or the like.

### <Pedestal 200>

FIG. 8(a) is a front view of the pedestal 200, FIG. 8(b) is a left side view of the pedestal 200, FIG. 8(c) is a plan view of the pedestal 200, and FIG. 8(d) is a perspective view of the pedestal 200.

When the storage space SP323 of the freezing container 300 is cooled to an extremely low temperature by the refrigerant LQN such as liquid nitrogen, the air in the storage space SP323 is liquefied to become the liquid air LQA, which is accumulated in the storage space SP323. The pedestal 200 illustrated in FIGS. 8 is a member for preventing contact of the accommodation unit group 1 (the accommodation units 10, 20, 30, and 40) with the liquid air LQA, and is used for the purpose of arranging the accommodation unit group 1 above the bottom surface of the storage space SP323.

As illustrated in FIGS. 8(a) to (d), the pedestal 200 includes the seat plate 201 having a quadrangular shape in plan view, a pair of legs 202 (a first leg 202a and a second leg 202b) respectively extending downward from one side edge (for example, the left side edge in FIG. 8(a)) of the seat plate 201 and the other side edge (for example, the right side edge in FIGS. 8) opposite to the one side edge, and a guide portion 203 extending upward from the other side edge of the seat plate 201. The pedestal 200 is made of a material having extremely low temperature resistance, for example, is formed by a stainless steel plate.

The seat plate 201 is a plate-shaped member on which the accommodation unit group 1 (the first accommodation unit 10 located at the bottom in the example of FIG. 6) is placed, and has a circular opening 201a provided at the center. When the pedestal 200 is moved, a finger of an operator or a hook provided at the distal end of an operation rod (not illustrated) is inserted into the opening 201a.

The first leg 202a provided on one side edge of the seat plate 201 is constituted by a plate-shaped member having a quadrangular shape. In the present embodiment, the first leg 202a is provided integrally with the seat plate 201 by bending one stainless steel plate. The second leg 202b provided on the other side edge of the seat plate 201 is constituted by a plate-shaped member having a bent piece 202b1 bent to the right on each of the front side edge and the rear side edge thereof. When the pedestal 200 is inserted into the storage space SP323, the lower ends of the first leg 202a and the second leg 202b abut against the bottom surface of the storage space SP323. Accordingly, the seat plate 201 is arranged higher than the bottom surface of the storage space SP323 by the height of the first leg 202a or the second leg 202b.

The guide portion 203 is a member for guiding each of the accommodation units 10, 20, 30, and 40 when the accommodation unit group 1 is put into and taken out from the storage space SP323, and has a guide surface 203a with which the right side surface of each accommodation unit 10, 20, 30, or 40 comes into contact.

The guide surface 203a extends upward from the other side edge (for example, the right side edge in FIG. 8(a)) of the seat plate 201. When the right side surface of each accommodation unit 10, 20, 30, or 40 is caused to slide along the guide surface 203a, the accommodation unit group 1 can be put into and taken out from the storage space SP323 smoothly.

Further, a bent piece 203b bent to the right is provided on each of the front side edge and the rear side edge of the guide portion 203. In the present embodiment, the guide portion 203 is provided integrally with the second leg 202b by bending one stainless steel plate.

### <Guide member>

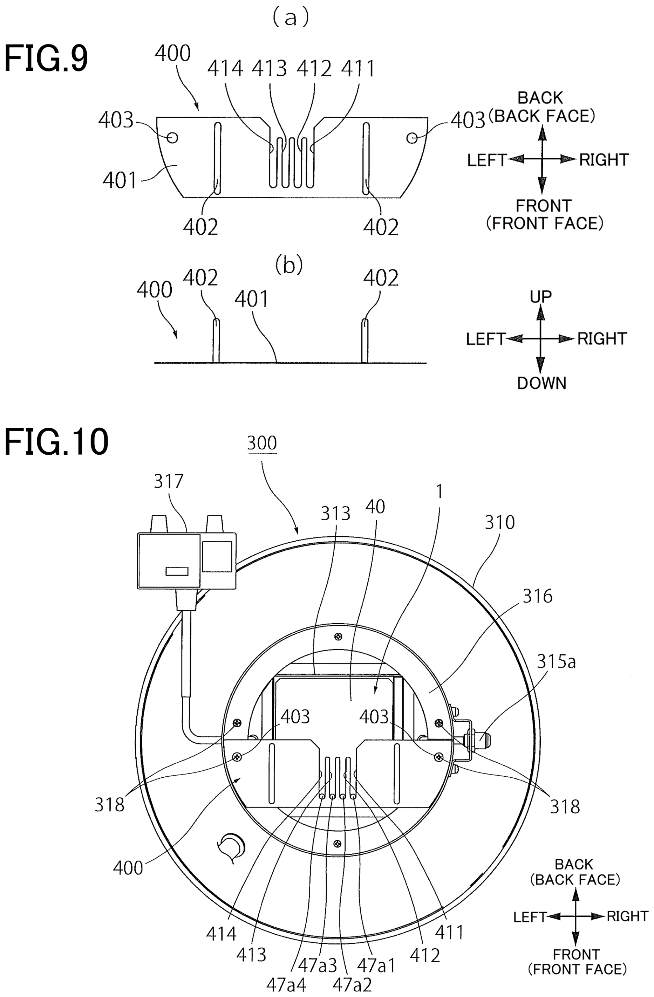

FIG. 9(a) is a plan view of a guide member 400, FIG. 9(b) is a front view of the guide member 400, and FIG. 10 is a plan view of the freezing container 300 with the guide member 400 attached thereto.

Since the storage space SP323 of the freezing container 300 is cooled to an extremely low temperature, the upper space SP324 of the freezing container 300 may be fogged by moisture in the air, and it may be difficult to visually recognize the storage space SP323. The guide member 400 is a member that guides the distal end (lower end) of the shaft member 80A to each of the female screw members 16a, 26a, 36a, and 46a respectively included in the accommodation units 10, 20, 30, and 40 even in a situation where it is difficult to visually recognize the storage space SP323.

As illustrated in FIGS. 9(a) and (b), the guide member 400 includes a guide body 401 having a substantially trapezoidal shape in plan view and a pair of left and right handles 402 provided on the upper surface of the guide body 401. Four guide grooves 411, 412, 413, and 414 are provided in a central portion of the guide body 401 in the right-left direction, which extend forward from the rear end edge.

The width of each of the guide grooves 411 to 414 is aligned with the width of the shaft body 81, and the interval in the right-left direction between the guide grooves 411 to 414 is aligned with the pitch of the four fourth upper insertion openings 47a1 to 47a4 described above (see FIG. 10). All the guide grooves 411 to 414 have the same length.

A pair of positioning holes 403 are formed at the left and right ends of the guide body 401. As illustrated in FIG. 10, the guide member 400 is attached to the opening portion 316 of the freezing container 300. For example, by aligning the positions of the positioning holes 403 of the guide body 401 with fixing screws 318 provided on the upper surface of the opening portion 316 and fitting the fixing screws 318 into the positioning holes 403, respectively, the guide member 400 is attached to a predetermined position of the opening portion 316.

When the guide member 400 is attached to the opening portion 316, the front ends of the four guide grooves 411 to 414 are positioned directly above the corresponding fourth upper insertion openings 47a1 to 47a4, respectively. Therefore, by inserting the shaft body 81 into a desired one of the guide grooves 411 to 414, moving the shaft body 81 to the front end of the one of the guide grooves 411 to 414, and then moving the shaft body 81 downward, it is possible to easily insert the distal end of the shaft body 81 into the corresponding one of the fourth upper insertion openings 47a1 to 47a4.

Further, in a state where the shaft body 81 is inserted in the corresponding one of the fourth upper insertion openings 47a1 to 47a4, when the shaft body 81 is pressed against the front end of the one of the guide grooves 411 to 414, the angle of the shaft body 81 is fixed. When the shaft member 80A is moved downward with the angle of the shaft body 81 fixed, the male screw portion 82 can be guided to the corresponding one of the female screw members 16a to 46a.

When the male screw portion 82 is coupled to the corresponding one of the female screw members 16a to 46a, the guide member 400 is detached from the opening portion 316.

### <Method of using accommodation apparatus 100A>

Next, a method of using the accommodation apparatus 100A according to the first embodiment is described.

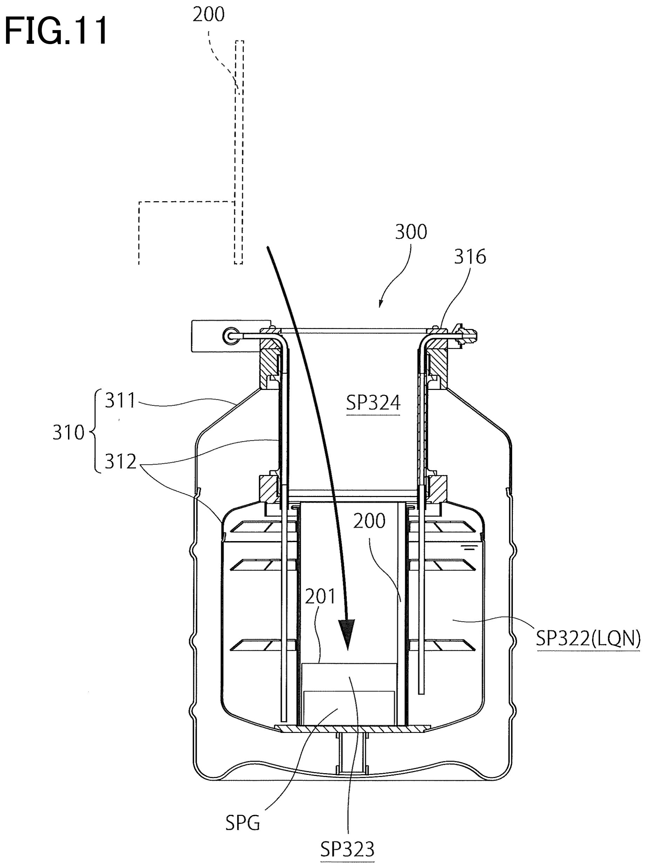

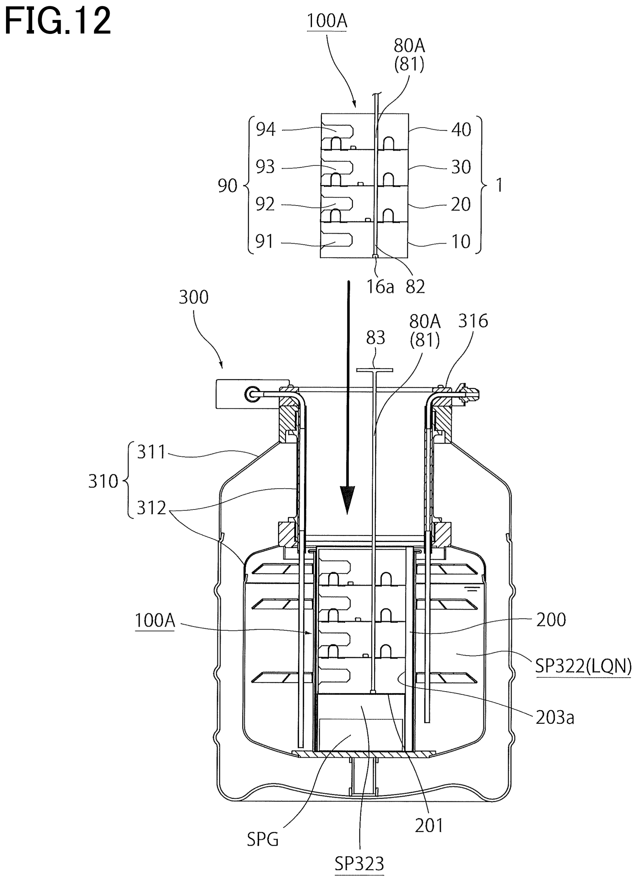

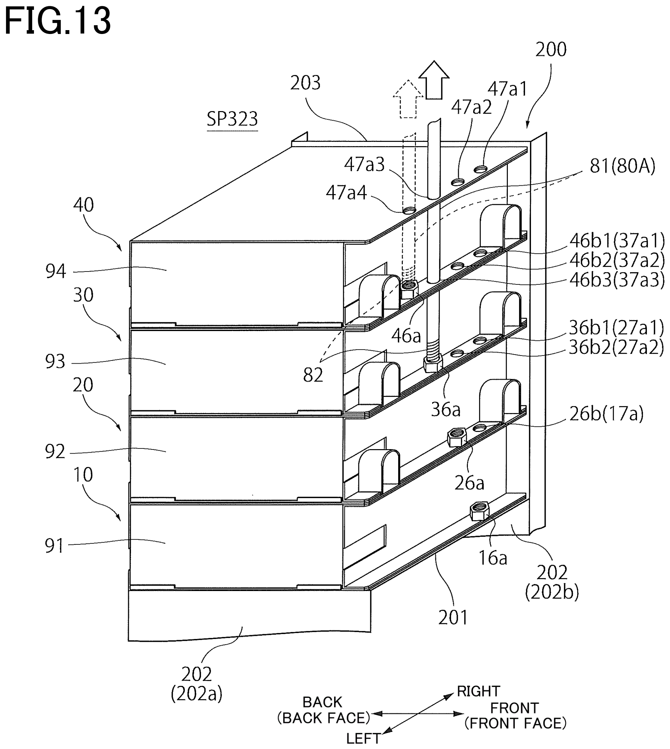

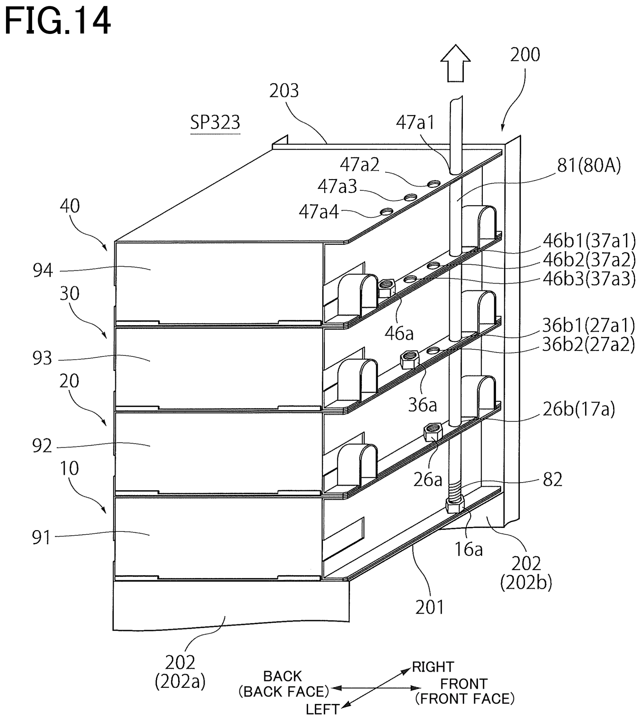

FIG. 11 is an explanatory diagram of a procedure of storing the pedestal 200 in the storage space SP323 of the freezing container 300, FIG. 12 is an explanatory diagram of a procedure of storing the accommodation apparatus 100A with the freezing target group 90 accommodated therein in the storage space SP323 of the freezing container 300, FIG. 13 is an explanatory diagram of a procedure when the freezing targets 93 and 94 are taken out from among the freezing targets 91 to 94 stored in the storage space SP323, and FIG. 14 is an explanatory diagram of a procedure when all the freezing targets 91 to 94 stored in the storage space SP323 are taken out.

In the following description, the freezing targets 91 to 94 are a plurality of vials each stored in a box, for example, and FIGS. 12 to 14 illustrate the box accommodating the vials therein.

As illustrated in FIG. 11, the pedestal 200 is stored in the storage space SP323 of the freezing container 300. The pedestal 200 is stored by, for example, hooking the distal end of a hook (not illustrated) of an operation rod or a finger of an operator on the opening 201a (see FIG. 8(c)) provided in the seat plate 201 and inserting the operation rod or an arm of the operator into the storage space SP323. In the illustrated example, the liquid absorbent SPG is stored in the storage space SP323 before the pedestal 200 is stored.

As illustrated in FIG. 12, after the pedestal 200 is stored, the accommodation unit group 1 (the freezing target group 90) is stored in the storage space SP323. In the illustrated example, the second accommodation unit 20 with the second freezing target 92 accommodated therein is placed on the first accommodation unit 10 with the first freezing target 91 accommodated therein, the third accommodation unit 30 with the third freezing target 93 accommodated therein is placed on the second accommodation unit 20, and the fourth accommodation unit 40 with the fourth freezing target 94 accommodated therein is placed on the third accommodation unit 30. The male screw portion 82 of the shaft member 80A is coupled to the first female screw member 16a included in the first accommodation unit 10.

The operator grips the handle 83 of the shaft member 80A and stores the accommodating unit group 1 into the storage space SP323. When the accommodation unit group 1 is stored, the accommodation unit group 1 is moved downward with the right side surface thereof abutting against the guide surface 203a of the pedestal 200. Accordingly, the accommodation unit group 1 can be stored in the storage space SP323 smoothly.

After the accommodation unit group 1 is placed on the seat plate 201, the shaft member 80A is rotated in the reverse direction of the male screw portion 82 to release the coupling state between the shaft member 80A and the first female screw member 16a, and the shaft member 80A is pulled up. Accordingly, storing the accommodation unit group 1 in the storage space SP323 is finished.

In a case of taking out each of the accommodation units 10 to 40 (each of the freezing targets 91 to 94) stored in the storage space SP323, as described with reference to FIG. 10, the guide member 400 is attached to the opening portion 316 of the freezing container 300 before coupling of the shaft member 80A.

In this case, the male screw portion 82 of the shaft member 80A is coupled to one of the female screw members 16a to 46a which is included in one of the accommodation units 10 to 40 to be taken out. In this case, by inserting the shaft body 81 into a desired one of the guide grooves 411 to 414 (see FIG. 10), moving the shaft body 81 to the front end of the desired one of the guide grooves 411 to 414, and then moving the shaft body 81 downward, it is possible to easily insert the shaft body 81 into the corresponding one of the fourth upper insertion openings 47a1 to 47a4. As a result, the desired one of the female screw members 16a to 46a and the male screw portion 82 can be coupled to each other easily.

After the male screw portion 82 is coupled to the corresponding one of the female screw members 16a to 46a, the guide member 400 is detached from the opening portion 316.

As indicated with the solid line in FIG. 13, when the shaft body 81 is inserted into the fourth upper insertion opening 47a3, which is the second from the left, to cause the distal end (lower end) of the male screw portion 82 to abut against the third female screw member 36a, and then the shaft body 81 is rotated in the forward direction of the male screw, the male screw portion 82 and the third female screw member 36a are coupled to each other. When the shaft member 80A is pulled up with the male screw portion 82 coupled to the third female screw member 36a, the third accommodation unit 30 (the third freezing target 93) and the fourth accommodation unit 40 (the fourth freezing target 94) can be taken out while the first accommodation unit 10 (the first freezing target 91) and the second accommodation unit 20 (the second freezing target 92) are left in the storage space SP323 of the freezing container 300.

As indicated with the dotted line in FIG. 13, by inserting the shaft body 81 into the leftmost fourth upper insertion opening 47a4 to couple the male screw portion 82 and the fourth female screw member 46a to each other, and then pulling up the shaft member 80A, only the fourth accommodation unit 40 (the fourth freezing target 94) can be taken out from the storage space SP323 of the freezing container 300.

As illustrated in FIG. 14, by inserting the shaft body 81 into the rightmost fourth upper insertion opening 47a1 to couple the male screw portion 82 and the first female screw member 16a to each other, and then pulling up the shaft member 80A, the first to fourth accommodation units 10 to 40 (the first to fourth freezing targets 91 to 94) can be taken out collectively from the storage space SP323 of the freezing container 300.

As described above, when the accommodation apparatus 100A according to the first embodiment is used, it is possible to take out a freezing target to be taken out while leaving a freezing target not to be taken out in the storage space SP323, by selecting one of the female screw members 16a to 46a to which the shaft member 80A is to be coupled.

For example, when the shaft member 80A is coupled to the second female screw member 26a of the second accommodation unit 20 and is then pulled up, the second accommodation unit 20 (the second freezing target 92), the third accommodation unit 30 (the third freezing target 93), and the fourth accommodation unit 40 (the fourth freezing target 94) can be taken out while the first accommodation unit 10 (the first freezing target 91) is left in the storage space SP323.

In the accommodation apparatus 100A according to the present embodiment, it is not necessary to ensure a passage for allowing a selected accommodation unit to pass therethrough above the selected accommodation unit. Therefore, the size of each of the accommodation units 10 to 40 stored in the storage space SP323 can be maximized in accordance with the storage space SP323, so that the quantity of freezing targets can be increased as compared with a case of using a conventional accommodation apparatus.

### <Second embodiment>

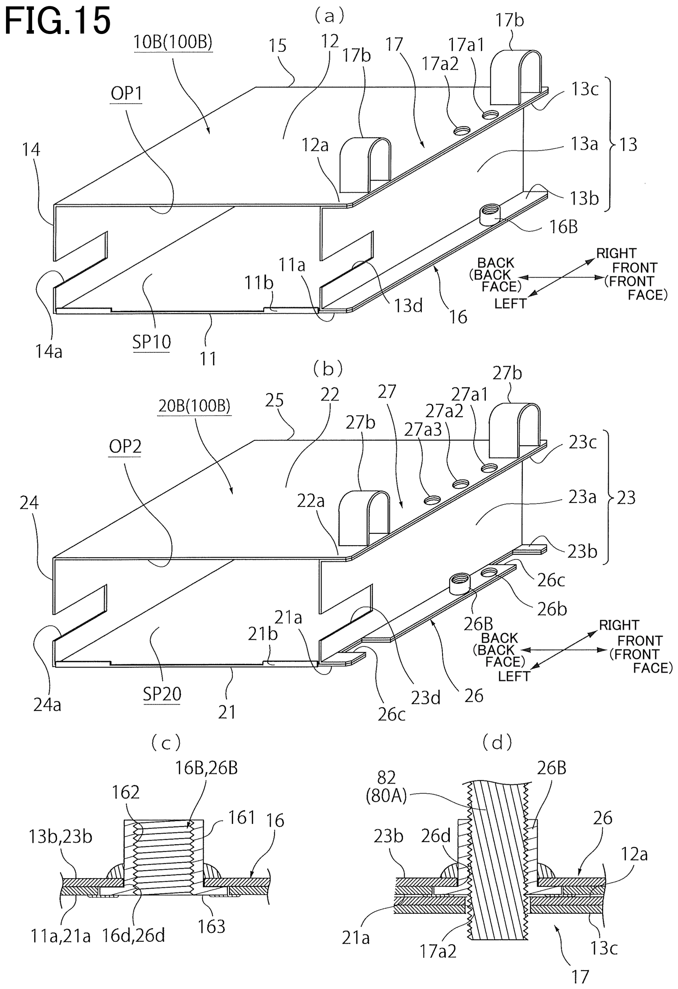

FIG. 15(a) is a perspective view of a first accommodation unit 10B at a first stage (lowermost stage) included in an accommodation apparatus 100B according to a second embodiment, FIG. 15(b) is a perspective view of a second accommodation unit 20B at a second stage (middle stage), FIG. 15(c) is a cross-sectional view of each of female screw members 16B and 26B, and FIG. 15(d) is a cross-sectional view for explaining a state where the male screw portion 82 of the shaft member 80A and the second female screw member 26B are screwed together.

In the accommodation apparatus 100A according to the first embodiment described before, the female screw members 16a to 46a have been constituted by nuts made of stainless steel and have been fixed to the upper surfaces of the lower protruding pieces 16 to 46 by welding, respectively. Therefore, the lower ends of the female screw members 16a to 46a have been closed by the lower protruding pieces 16 to 46, respectively.

In a case where the effective screw length of the male screw portion 82 included in the shaft member 80A is longer than the length of the female screw of each of the female screw members 16a to 46a, if the male screw portion 82 of the shaft member 80A is excessively fastened to each of the female screw members 16a to 46a, the corresponding one of the lower protruding pieces 16 to 46 is pushed down by the shaft member 80A. As a result, there is a risk that each of the female screw members 16a to 46a may come off from the corresponding one of the lower protruding pieces 16 to 46.

In view of such circumstances, in the accommodation apparatus 100B according to the second embodiment, as each female screw member (the first female screw member 16B and the second female screw member 26B are illustrated in FIGS. 15), a member with a female screw penetrating in the axial direction formed on the inner peripheral surface thereof is used. The characteristic configuration is to attach each female screw member to the lower protruding piece with the lower end of the female screw open.

The accommodation apparatus 100B according to the second embodiment is described below and configurations identical to those of the accommodation apparatus 100A according to the first embodiment are denoted by like reference signs and explanations thereof are omitted.

As illustrated in FIG. 15(a), the first accommodation unit 10B of the accommodation apparatus 100B according to the second embodiment also includes the bottom plate 11, the top plate 12, the front plate 13, the back plate 14, and the right side plate 15, and has the entrance/exit OP1 for the first freezing target 91 on the left side.

The front end part 11a of the bottom plate 11 and the lower end part 13b of the front plate 13 are joined to each other to form the lower protruding piece 16, and the front end part 12a of the top plate 12 and the upper end part 13c of the front plate 13 are joined to each other to form the upper protruding piece 17.

The first female screw member 16B is fixed to the lower protruding piece 16.

As illustrated in FIG. 15(c), the first female screw member 16B includes a female screw body 161 having a hollow cylindrical shape, a female screw 162 provided on the inner peripheral surface of the female screw body 161, and a flange 163 extending from the lower end of the female screw body 161 outward in the radial direction.

The female screw body 161 is inserted from below into a mounting opening 16d provided in the lower protruding piece 16, and the flange 163 abuts against the lower surface of the lower protruding piece 16. For example, an opening larger than the outer diameter of the flange 163 is provided in the front end part 11a of the bottom plate 11, and the flange 163 is arranged in this opening.

In the present embodiment, the first female screw member 16B is fixed to the lower protruding piece 16 by welding the female screw body 161 and the upper surface of the lower protruding piece 14 together and welding the flange 163 and the lower surface of the lower protruding piece 46 together. Although not illustrated in the drawings, the pedestal 200 of the present embodiment has a seat-plate side insertion opening, through which the male screw portion 82 of the shaft body 81 can be inserted, in the seat plate 201 directly below the first female screw member 16B.

Two first upper insertion openings 17a1 and 17a2 are provided in the upper protruding piece 17. One first upper insertion opening 17a1 is provided at a position directly above the first female screw member 16B, and the other first upper insertion opening 17a2 is provided on the left side of the one first upper insertion opening 17a1.

As illustrated in FIG. 15(b), the second accommodation unit 20B of the accommodation apparatus 100B according to the second embodiment also includes the bottom plate 21, the top plate 22, the front plate 23, the back plate 24, and the right side plate 25, and has the entrance/exit OP2 for the second freezing target 92 on the left side.

The second lower insertion opening 26b is provided in the lower protruding piece 26 of the second accommodation unit 20B, and the second female screw member 26B is fixed on the left side of the second lower insertion opening 26b.

As illustrated in FIG. 15(c), the second female screw member 26B includes the female screw body 161, the female screw 162, and the flange 163, similarly to the first female screw member 16B. The female screw body 161 is inserted from below into the mounting opening 26d and is fixed to the lower protruding piece 26 by welding. When the second accommodation unit 20B is placed on the first accommodation unit 10B, the second female screw member 26B is arranged directly above the first upper insertion opening 17a2 of the first accommodation unit 10B.

Three second upper insertion openings 27a1, 27a2, and 27a3 are provided in the upper protruding piece 27 at a regular interval along the right-left direction. The right second upper insertion opening 27a1 is provided at a position directly above the second lower insertion opening 26b, and the central second upper insertion opening 27a2 is provided at a position directly above the second female screw member 26B.

As illustrated in FIG. 15(d), when the second accommodation unit 20B is placed on the first accommodation unit 10B, the position of the lower-end opening of the second female screw member 26B is aligned with the position of the first upper insertion opening 17a2 of the first accommodation unit 10B. Accordingly, even if the shaft member 80A is excessively fastened to the second female screw member 26B, the male screw portion 82 of the shaft member 80A passes through the first upper insertion opening 17a2. Therefore, the inconvenience that the second female screw member 26B comes off from the lower protruding piece 26 of the second accommodation unit 20B is prevented.

Similarly, when the first accommodation unit 10B is placed on the seat plate 201, the position of the lower-end opening of the first female screw member 16B is aligned with the position of a seat-plate side insertion opening 201b (indicated with the dotted line in FIG. 8(c)) provided in the seat plate 201. Accordingly, even if the shaft member 80A is excessively fastened to the first female screw member 16B, the lower end of the shaft member 80A passes through the sear-plate side insertion opening 201b. Therefore, the inconvenience that the first female screw member 16B comes off from the lower protruding piece 16 of the first accommodation unit 10B is prevented.

In the accommodation apparatus 100B according to the second embodiment, although not illustrated in the drawings, the third accommodation unit and the fourth accommodation unit are also configured similarly to the first accommodation unit 10B and the second accommodation unit 20B.

### <Third embodiment>

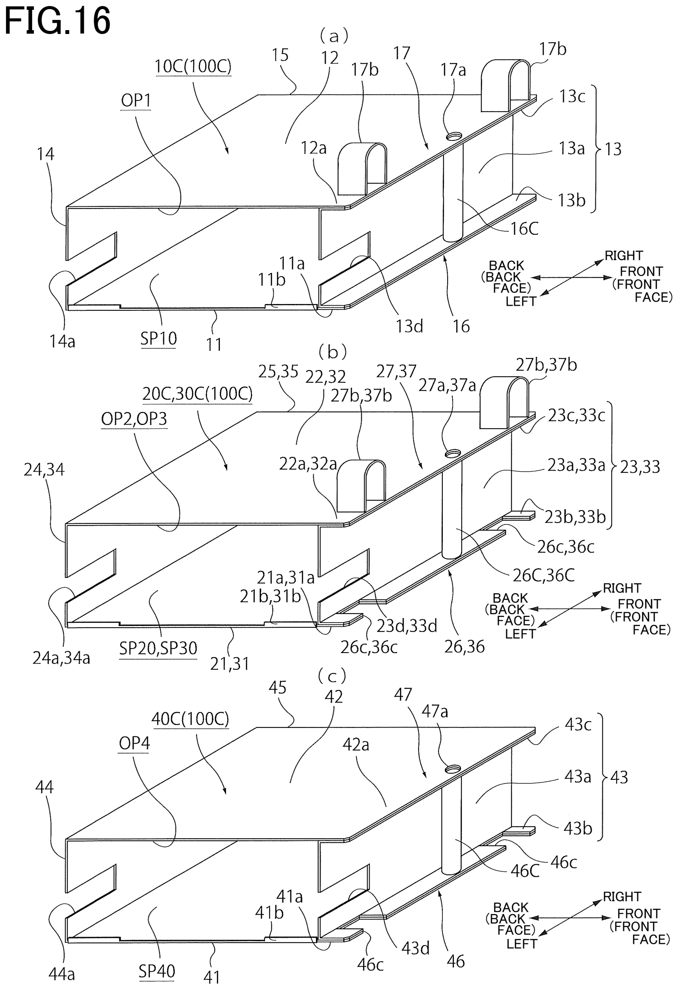

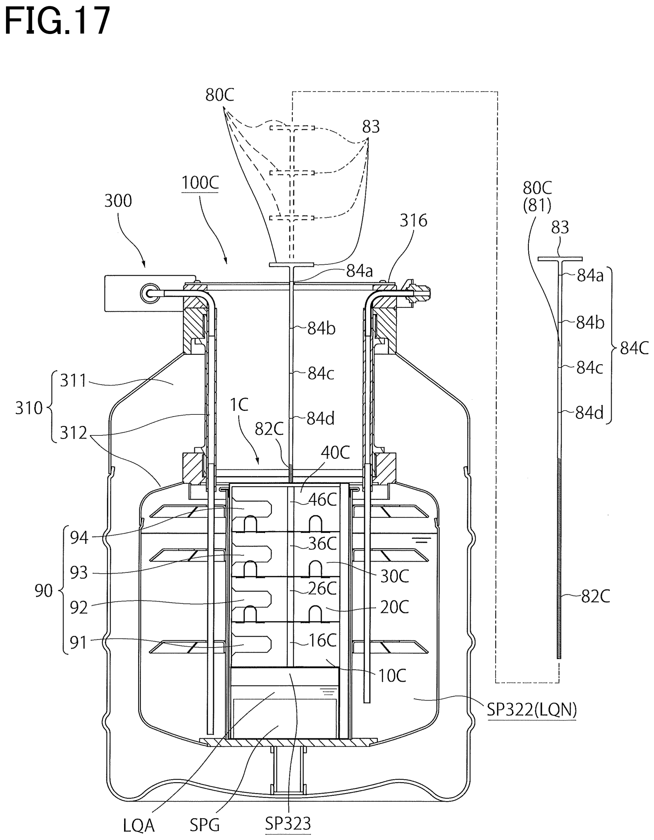

FIG. 16(a) is a perspective view of an accommodation unit 10C at a first stage (lowermost stage) included in an accommodation apparatus 100C according to a third embodiment, FIG. 16(b) is a perspective view of an accommodation unit 20C or 30C at a second or third stage (middle stage), FIG. 16(c) is a perspective view of an accommodation unit 40C at a fourth stage (uppermost state), and FIG. 17 is an explanatory diagram of a method of using the accommodation apparatus 100C according to the third embodiment.

In each of the accommodation apparatuses 100A and 100B of the first and second embodiments described before, the positions of the female screw members 16a to 46a included in the respective accommodation units 10 to 40 or the positions of the female screw members 16B and 26B included in the respective accommodation units 10B and 20B are provided to be shifted from each other in plan view. However, the configuration of the female screw members is not limited thereto.

In the accommodation apparatus 100C according to the third embodiment, the characteristic configuration is the positions of respective female screw members 16C to 46C aligned with each other in plan view in a state where the respective accommodation units 10C to 40C are stacked.

The accommodation apparatus 100C according to the third embodiment is described below and configurations identical to those of the accommodation apparatuses 100A and 100B according to the first and second embodiments are denoted by like reference signs and explanations thereof are omitted.

As illustrated in FIG. 16(a), the first accommodation unit 10C of the accommodation apparatus 100C according to the third embodiment also includes the bottom plate 11, the top plate 12, the front plate 13, the back plate 14, and the right side plate 15, and has the entrance/exit OP1 for the first freezing target 91 on the left side.

The front end part 11a of the bottom plate 11 and the lower end part 13b of the front plate 13 are joined to each other to form the lower protruding piece 16, and the front end part 12a of the top plate 12 and the upper end part 13c of the front plate 13 are joined to each other to form the upper protruding piece 17.

The first female screw member 16C is a cylindrical member having a length corresponding to the distance between the lower protruding piece 46 and the upper protruding piece 47, and is provided with a female screw on the inner peripheral surface thereof, the female screw being capable of being coupled to a male screw provided in a male screw portion 82C (see FIG. 17) of a shaft member 80C. The first female screw member 16C is formed by a stainless steel material, for example, and is fixed to each of the lower protruding piece 16 and the upper protruding piece 17 by welding or the like. In the third embodiment, the first female screw member 16C is fixed to a substantially middle position in the right-left direction in each of the lower protruding piece 16 and the upper protruding piece 17.

A first lower insertion opening (not illustrated) is provided in the lower protruding piece 16 directly below the first female screw member 16C (in more detail, directly below the female screw included in the first female screw member 16C), the first lower insertion opening having a size that allows the shaft body 81 to be inserted therethrough. Similarly, the first upper insertion opening 17a is provided in the upper protruding piece 47 directly above the first female screw member 16C (in more detail, directly above the female screw included in the first female screw member 16C), the first upper insertion opening 17a having a size that allows the shaft body 81 to be inserted therethrough. Therefore, the male screw portion 82C of the shaft member 80C can cause its lower end to protrude from the lower protruding piece 16 while being coupled to the first female screw member 16C.

As illustrated in FIG. 16(b), the second accommodation unit 20C and the third accommodation unit 30C also include the bottom plates 21 and 31, the top plates 22 and 32, the front plates 23 and 33, the back plates 24 and 34, and the right side plates 25 and 35, and have the entrance/exit OP2 for the second freezing target 92 and the entrance/exit OP3 for the third freezing target 93 on the left sides thereof.

The front end part 21a of the bottom plate 21 and the lower end part 23b of the front plate 23 are joined to each other to form the lower protruding piece 26, and the front end part 22a of the top plate 22 and the upper end part 23c of the front plate 23 are joined to each other to form the upper protruding piece 27. Similarly, the front end part 31a of the bottom plate 31 and the lower end part 33b of the front plate 33 are joined to each other to form the lower protruding piece 36, and the front end part 32a of the top plate 32 and the upper end part 33c of the front plate 33 are joined to each other to form the upper protruding piece 37.

A second female screw member 26C and a third female screw member 36C have the same configuration as the first female screw member 16C described above, and are each fixed to the lower protruding piece 26 or 36 and the upper protruding piece 27 or 37 by welding, for example. Each of the second female screw members 26C and the third female screw member 36C is also fixed to a substantially middle position in the right-left direction in the lower protruding piece 26 or 36 and in the upper protruding piece 27 or 37, similarly to the first female screw member 16C. Therefore, when the accommodation units 10C, 20C, and 30C are viewed from above in a state where the second accommodation unit 20C is placed on the first accommodation unit 10C and the third accommodation unit 30C is placed on the second accommodation unit 20C, the positions of the second female screw member 26C and the third female screw member 36C are aligned with the position of the first female screw member 16C.

A second lower insertion opening (not illustrated) is provided in the lower protruding piece 16 directly below the second female screw member 26C, and a second upper insertion opening 27a is provided in the upper protruding piece 47 directly above the second female screw member 26C. Similarly, a third lower insertion opening (not illustrated) is provided in the lower protruding piece 16 directly below the third female screw member 36C, and a third upper insertion opening 37a is provided in the upper protruding piece 47 directly above the third female screw member 36C.

Therefore, the male screw portion 82C of the shaft member 80C can cause its lower end to protrude from the lower protruding piece 26 or 27 while being coupled to the second female screw member 26C or the third female screw member 36C.

As illustrated in FIG. 16(c), the fourth accommodation unit 40C also includes the bottom plate 41, the top plate 42, the front plate 43, the back plate 44, and the right side plate 45, and has the entrance/exit OP4 for the fourth freezing target 94 on the left side.

The front end part 41a of the bottom plate 41 and the lower end part 43b of the front plate 43 are joined to each other to form the lower protruding piece 46, and the front end part 42a of the top plate 42 and the upper end part 43c of the front plate 43 are joined to each other to form the upper protruding piece 47.

The fourth female screw member 46C also has the same configuration as the first female screw member 16C described above, and is fixed to a substantially middle position in the right-left direction in each of the lower protruding piece 46 and the upper protruding piece 47 by welding, for example. Therefore, when the accommodation units 10C to 40C stacked on one another are viewed from above, the respective positions of the female screw members 16C to 46C are aligned with each other.

Further, a fourth lower insertion opening (not illustrated) is provided in the lower protruding piece 46 directly below the fourth female screw member 46C, and a fourth upper insertion opening 47a is provided in the upper protruding piece 47 directly above the fourth female screw member 46C. Therefore, the male screw portion 82C of the shaft member 80C can cause its lower end to protrude from the lower protruding piece 46 while being coupled to the fourth female screw member 46C.

In the accommodation apparatus 100C according to the third embodiment, each of the female screw members 16C to 46C is fixed to the corresponding one of the lower protruding pieces 16 to 46 and the corresponding one of the upper protruding pieces 17 to 47 with the position of the female screw in the circumferential direction aligned with the male screw of the male screw portion 82C of the shaft member 80C.

As illustrated in FIG. 17, when the shaft body 81 is rotated in the positive direction in a state where the accommodation units 10C to 40C are stacked on one another, the distal end part of the male screw portion 82C is coupled to the fourth female screw member 46C first, and is then coupled to the third female screw member 36C. When the shaft body 81 is further rotated in the positive direction, the distal end part of the male screw portion 82C is coupled to the second female screw member 26C and the first female screw member 16C in this order.

The shaft member 80C is formed by a round bar made of stainless steel, for example, and includes the shaft body 81 in the form of a bar, the male screw portion 82C provided on the distal end side from a middle position in the axial direction of the shaft body 81, a scale portion 84C provided on the proximal end side from the middle position in the axial direction of the shaft body 81, and the handle 83 provided at the proximal end of the shaft body 81.

A male screw capable of being coupled to the female screw of each of the female screw members 16C to 46C is provided in the male screw portion 82C. The scale portion 84C indicates the insertion depth of the male screw portion 82C into each female screw member 16C, 26C, 36C, or 46C and, in the example of FIG. 17, includes four scales provided along the circumferential direction, the scales being arranged at intervals along the axial direction.

A first scale 84a provided closest to the handle 83 among the four scales corresponds to the first accommodating unit 10C. For example, when the shaft body 81 is caused to enter each of the female screw members 16C to 46C until the first scale 84a reaches the height of the opening portion 316 of the freezing container 300, the distal end part of the male screw portion 82C is positioned on the first female screw member 16C. Therefore, when the shaft member 80C is pulled up in a state where the first scale 84a has entered to the height of the opening portion 316 of the freezing container 300, the four accommodation units 10C to 40C can be taken out collectively from the freezing container 300.

A second scale 84b that is the second from the handle 83 side corresponds to the second accommodating unit 20C. For example, when the shaft body 81 is caused to enter each of the female screw members 26C to 46C until the second scale 84b reaches the height of the opening portion 316 of the freezing container 300, the distal end part of the male screw portion 82C is positioned on the second female screw member 26C. Therefore, when the shaft member 80C is pulled up in a state where the second scale 84b has entered to the height of the opening portion 316 of the freezing container 300, the second accommodation unit 20C, the third accommodation unit 30C, and the fourth accommodation unit 40C can be taken out collectively from the freezing container 300 while the first accommodation unit 10C is left in the freezing container 300.

A third scale 84c that is the third from the handle 83 side corresponds to the third accommodating unit 30C. For example, when the shaft body 81 is caused to enter the female screw members 36C and 46C until the third scale 84c reaches the height of the opening portion 316 of the freezing container 300, the distal end part of the male screw portion 82C is positioned on the third female screw member 36C. Therefore, when the shaft member 80C is pulled up in a state where the third scale 84c has entered to the height of the opening portion 316 of the freezing container 300, the third accommodation unit 30C and the fourth accommodation unit 40C can be taken out collectively from the freezing container 300 while the first accommodation unit 10C and the second accommodation unit 20C are left in the freezing container 300.

A fourth scale 84d closest to the male screw portion 82C corresponds to the fourth accommodating unit 40C. For example, when the shaft body 81 is caused to enter the fourth female screw member 46C until the fourth scale 84d reaches the height of the opening portion 316 of the freezing container 300, the distal end part of the male screw portion 82C does not reach the third female screw member 36C. Therefore, when the shaft member 80C is pulled up in a state where the fourth scale 84d has entered to the height of the opening portion 316 of the freezing container 300, only the fourth accommodation unit 40C can be taken out from the freezing container 300 while the first accommodation unit 10C, the second accommodation unit 20C, and the third accommodation unit 30C are left in the freezing container 300.

In the accommodation apparatus 100C according to the third embodiment, a bottomed female screw member that is closed at the lower end may be used as the first female screw member 16C. Further, it is unnecessary to provide the first lower insertion opening in the lower protruding piece 16.

### <Other embodiments>

In the accommodation apparatus 100A according to the first embodiment, a coupled portion to be coupled to the shaft member 80C is constituted by each of the female screw members 16a to 46a. However, the configuration of the coupled portion is not limited thereto.

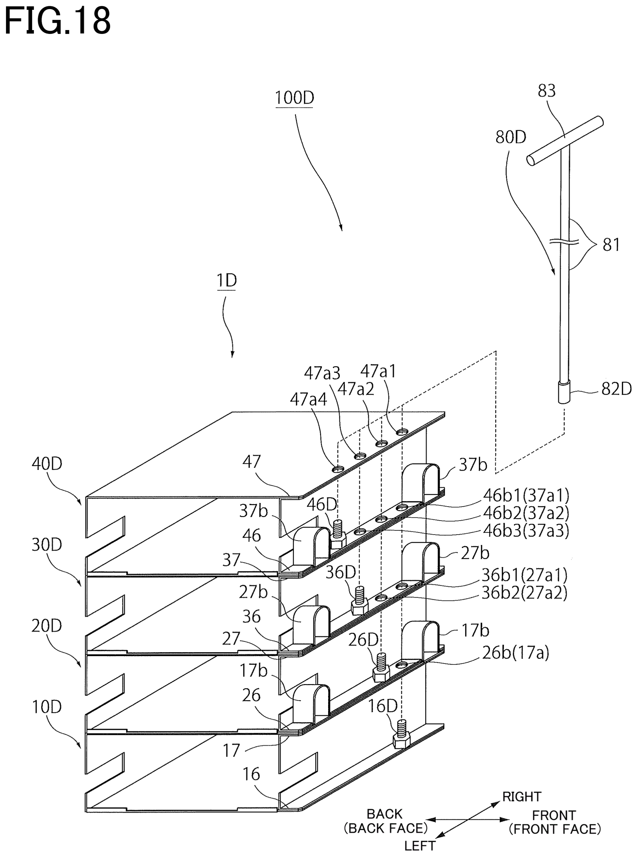

FIG. 18 is an explanatory diagram of an accommodation apparatus 100D according to a fourth embodiment. In the accommodation apparatus 100D according to the fourth embodiment, accommodation units 10D, 20D, 30D, and 40D constituting an accommodation unit group 1D include male screw members 16D, 26D, 36D, and 46D as coupled portions to be coupled to a shaft member 80D, respectively. Each of the male screw members 16D to 46D includes a male screw portion having a male screw formed on the outer peripheral surface thereof, and is constituted by a hexagon head bolt, for example. Further, the lower end is fixed to the corresponding one of the lower protruding pieces 16 to 46 with the male screw portion directed upward. In connection with this configuration, at the lower end of the shaft body 81 of the shaft member 80D, a female screw portion 82D is provided which can be coupled to the male screw portion of each of the male screw members 16D to 46D. The female screw portion 82D is a tubular member having a female screw on the inner peripheral surface thereof.

Also in the accommodation apparatus 100D according to the fourth embodiment, operational effects identical to those of the accommodation apparatus 100A according to the first embodiment can be obtained.

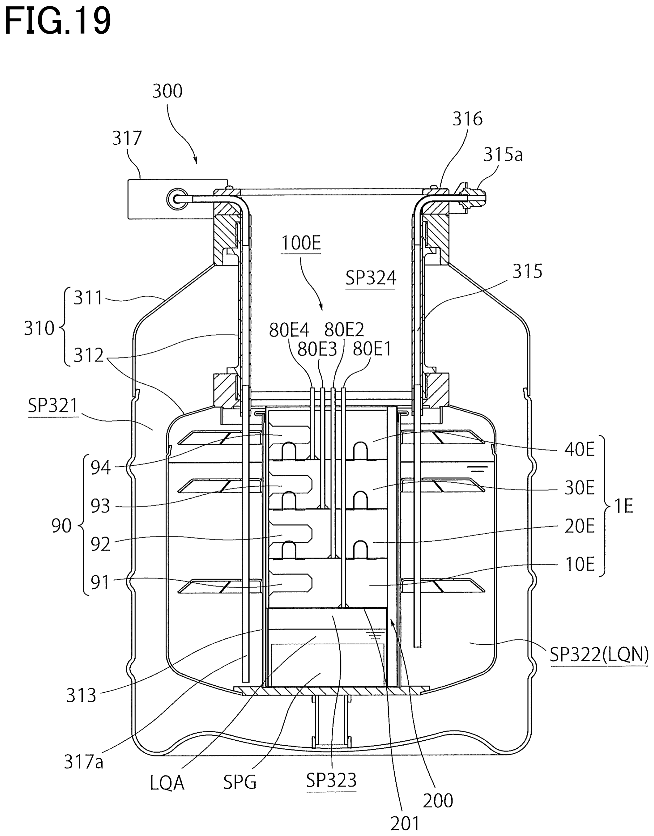

In the accommodation apparatuses 100A, 100B, 100C, and 100D according to the respective embodiments described above, the shaft members 80A, 80C, and 80D are configured to be detachable from each of the accommodation units 10 to 40 or the like. However, the configuration of the shaft member is not limited thereto. FIG. 19 is an explanatory diagram of an accommodation apparatus 100E according to a fifth embodiment.

The accommodation apparatus 100E according to the fifth embodiment is characteristic in shaft portions 80E1, 80E2, 80E3, and 80E4 integrally provided, in place of the female screw members (the coupled portions) 16a to 46a of the first embodiment. Therefore, the configuration of an accommodation unit group 1E (accommodation units 10E, 20E, 30E, and 40E) not illustrated in FIG. 19 is the same as each of the accommodation units 10 to 40 of the first embodiment illustrated in FIGS. 2 to 5. Accordingly, detailed descriptions thereof are omitted.

As illustrated in FIG. 19, the first shaft portion 80E1 provided in the first accommodation unit 10E is arranged with its upper end located above the top plate 42 of the fourth accommodation unit 40 through the second lower insertion opening 26b and the second upper insertion opening 27al of the second accommodation unit 20E, the third lower insertion opening 36b1 and the third upper insertion opening 37a1 of the third accommodation unit 30E, and the fourth lower insertion opening 46b1 and the fourth upper insertion opening 47a1 of the fourth accommodation unit 40.

The second shaft portion 80E2 provided in the second accommodation unit 20E is arranged with its upper end located above the top plate 42 of the fourth accommodation unit 40 through the third lower insertion opening 36b2 and the third upper insertion opening 37a2 of the third accommodation unit 30E, and the fourth lower insertion opening 46b2 and the fourth upper insertion opening 47a2 of the fourth accommodation unit 40. Similarly, the third shaft portion 80E3 provided in the third accommodation unit 30E is arranged with its upper end located above the top plate 42 of the fourth accommodation unit 40 through the fourth lower insertion opening 46b3 and the fourth upper insertion opening 47a3 of the fourth accommodation unit 40.

Further, the fourth shaft portion 80E4 provided in the fourth accommodation unit 40 is arranged with its upper end located above the top plate 42 of the fourth accommodation unit 40.

In the accommodation apparatus 100E according to the fifth embodiment, it is possible to take out a desired one of the accommodation units 10E, 20E, 30E, and 40E (the freezing targets 91, 92, 93, and 94) from the freezing container 300 by selectively gripping and pulling up the upper end of each shaft portion 80E1, 80E2, 80E3, or 80E4 arranged above the top plate 42 of the fourth accommodation unit 40E.

For example, by pulling up the upper end of the first shaft portion 80E1, the first to fourth accommodation units 10E to 40E can be taken out. By pulling up the upper end of the second shaft portion 80E2, the second to fourth accommodation units 20E to 40E can be taken out, while the first accommodation unit 10E is left. Similarly, by pulling up the upper end of the third shaft portion 80E3, the third and fourth accommodation units 30E and 40E can be taken out, while the first and second accommodation units 10E and 20E are left, and by pulling up the upper end of the fourth shaft portion 80E4, only the fourth accommodation unit 40E can be taken out, while the first to third accommodation units 10E to 30E are left.

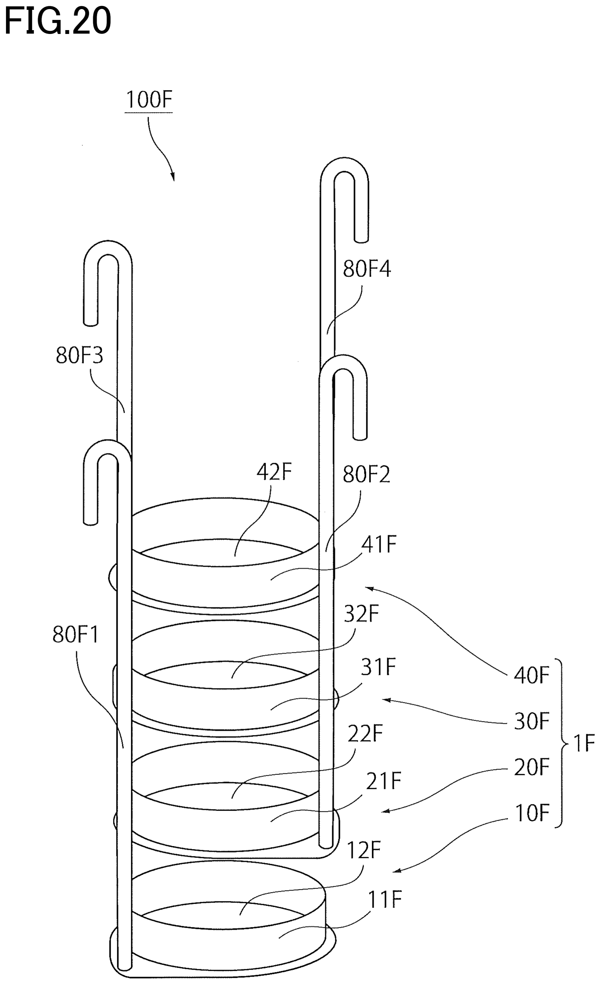

FIG. 20 is an explanatory diagram of an accommodation apparatus 100F according to a sixth embodiment. Also in the accommodation apparatus 100F according to the sixth embodiment, as in the accommodation unit 100E according to the fifth embodiment, the configuration in which shaft portions 80F1, 80F2, 80F3, and 80F4 are integrally coupled to accommodation units 10F, 20F, 30F, and 40F, respectively, is characteristic.

The accommodation apparatus 100F according to the sixth embodiment includes the accommodation units 10F, 20F, 30F, and 40F respectively accommodating the freezing targets 91, 92, 93, and 94 and the shaft portions 80F1, 80F2, 80F3, and 80F4 partly coupled to the respective accommodation units 10F, 20F, 30F, and 40F.

An accommodation unit group 1F includes the first accommodation unit 10F placed on a pedestal 201, the second accommodation unit 20F placed on the first accommodation unit 10F, the third accommodation unit 30F placed on the second accommodation unit 20F, and the fourth accommodation unit 40F placed on the third accommodation unit 30F.

The shaft portion 80F1, 80F2, 80F3, and 80F4 include the first shaft portion 80F1 coupled to the first accommodation unit 10F, the second shaft portion 80F2 coupled to the second accommodation unit 20F, the third shaft portion 80F3 coupled to the third accommodation unit 30F, and the fourth shaft portion 80F1 coupled to the fourth accommodation unit 40F.

In the present embodiment, the shaft portions 80F1, 80F2, 80F3, and 80F4 have different lengths from each other. The length of the first shaft portion 80F1 is the longest, the length of the second shaft portion 80F2 is the second longest, the length of the third shaft portion 80F3 is the third longest, and the length of the fourth shaft portion 80F4 is the shortest.

The first accommodation unit 10F includes a first bottom plate 11F and a first side wall 12F provided on the upper surface of the first bottom plate 11F. The first side wall 12F has a short cylindrical shape and is fixed at its lower end to the first bottom plate 11 by welding or the like. The space on the inner peripheral side of the first side wall 12F in the first accommodation unit 10F is an accommodation space in which a freezing target is to be accommodated. In the accommodation apparatus 100F according to the sixth embodiment, it is assumed that the freezing target is accommodated in the space on the inner peripheral side of the first side wall 12F. The lower end of the first shaft portion 80F1 is fixed at a position on the first bottom plate 11F on the outer peripheral side of the first side wall 12F. The upper end of the first shaft portion 80F1 is bent in an inverted U-shape.

The second to fourth accommodation units 20F to 40F are configured in an identical manner to the first accommodation unit 10F. For example, the second accommodation unit 20F includes a second bottom plate 21F and a second side wall 22F, the third accommodation unit 30F includes a third bottom plate 31F and a third side wall 32F, and the fourth accommodation unit 40F includes a fourth bottom plate 41F and a fourth side wall 42F. The lower end of the second shaft portion 80F2 is fixed to the second bottom plate 21F, the lower end of the third shaft portion 80F3 is fixed to the third bottom plate 31F, and the lower end of the fourth shaft portion 80F4 is fixed to the fourth bottom plate 41F.

The accommodation unit group 1F is stored in the storage space SP323 in a stacked state. For example, in the storage space SP323, the second bottom plate 21F is placed on the first side wall 12F, the third bottom plate 31F is placed on the second side wall 22F, and the fourth bottom plate 41F is placed on the third side wall 32F.

The respective lengths of the shaft portions 80F1, 80F2, 80F3 and 80F4 in the present embodiment are defined as such lengths that the respective upper ends of the shaft portions 80F1, 80F2, 80F3, and 80F4 are at substantially the same height in a state where the accommodation units 10F, 20F, 30F, and 40F are stacked.

Also in the accommodation apparatus 100F according to the sixth embodiment, it is possible to take out a desired accommodation unit 10F, 20F, 30F, or 40F from the freezing container 300 by selectively gripping and pulling up the upper end of each of the shaft portions 80F1, 80F2, 80F3, and 80F4.

For example, by pulling up the upper end of the first shaft portion 80F1, the first to fourth accommodation units 10F to 40F can be taken out. By pulling up the upper end of the second shaft portion 80F2, the second to fourth accommodation units 20F to 40F can be taken out, while the first accommodation unit 10F is left. Similarly, by pulling up the upper end of the third shaft portion 80F3, the third and fourth accommodation units 30F and 40F can be taken out, while the first and second accommodation units 10F and 20F are left, and by pulling up the upper end of the fourth shaft portion 80F4, only the fourth accommodation unit 40F can be taken out, while the first to third accommodation units 10F to 30F are left.

As for the freezing container 300, the configuration of cooling the storage space SP323 with the refrigerant LQN stored in the refrigerant chamber SP322 has been employed in the embodiments described above. However, the configuration of the freezing container 300 is not limited thereto, as long as the storage space SP323 can be cooled. For example, a freezing container may be employed in which the refrigerant LQN supplied to the storage space SP323 is absorbed by a refrigerant absorbent provided in the refrigerant chamber SP322, thereby cooling the storage space SP323.

### [Summary of aspect examples, actions, and effects of present invention]

### <First aspect>

The present aspect provides the accommodation apparatus 100A for a freezing target including the accommodation units 10 to 40 respectively accommodating the freezing targets 91 to 94 and the shaft member 80A detachably coupled to each of the accommodation units 10 to 40, and having a configuration in which each of the accommodation units 10 to 40 is put into and taken out from the freezing container 300 by using the shaft member 80A in a state where the shaft member 80A is coupled to the each of the accommodation units 10 to 40 stored in the storage space SP323 of the freezing container 300 (inside of the freezing container 300), and is characterized in that the accommodation units 10 to 40 include the first accommodation unit 10 (the first accommodation unit) accommodating the first freezing target 91 and including the first female screw member 16a (the first coupled portion) to which a part (the male screw portion 82) of the shaft member 80A is detachably coupled, and the second accommodation unit 20 (the second accommodation unit) accommodating the second freezing target 92, including the second female screw member 26a (the second coupled portion) to which a part (the male screw portion 82) of the shaft member 80A is detachably coupled, and arranged above the first accommodation unit 10 in a state of being stored in the freezing container 300, and that the accommodation apparatus 100A has a configuration in which the first and second accommodation units 10 and 20 are taken out collectively by coupling the shaft member 80A to the first female screw member 16a in a state where the second accommodation unit 20 is arranged above the first accommodation unit 10.

According to the accommodation apparatus 100A of the present aspect, when the shaft member 80A is coupled to the first female screw member 16a and is then pulled up in the state where the second accommodation unit 20 is placed on the first accommodation unit 10 in the storage space SP323, the first accommodation unit 10 (the first freezing target 91) and the second accommodation unit 20 (the second freezing target 92) can be taken out collectively from the storage space SP323. Meanwhile, when the shaft member 80A is coupled to the second female screw member 26a and is then pulled up, the second accommodation unit 20 can be taken out from the storage space SP323 while the first accommodation unit 10 is left in the storage space SP323.

As described above, according to the accommodation apparatus 100A of the present aspect, the accommodation unit 20 above the selected accommodation unit 10 can be pulled up collectively with the selected accommodation unit 10. Therefore, it is unnecessary to ensure a passage for allowing the selected accommodation unit 10 to pass therethrough above the selected accommodation unit 10 in the storage space SP323. Consequently, the size of each of the accommodation units 10 and 20 stored in the storage space SP323 can be maximized in accordance with the size of the storage space SP323, so that the quantity of the freezing targets 91 and 92 that can be stored can be increased as compared with a case of using a conventional accommodation apparatus.

### <Second aspect>

The accommodation apparatus 100A according to the present aspect is characterized in that the shaft member 80A has a configuration capable of being coupled to the first female screw member 16a or the second female screw member 26a individually and selectively in a state where the second accommodation unit 20 is arranged above the first accommodation unit 10.

According to the accommodation apparatus 100A of the present aspect, it is possible to easily select each of the accommodation units 10 and 20 (the freezing target 91 or 92) to be taken out from the storage space SP323 by coupling the shaft member 80A to the female screw member 16a or 26a individually and selectively.

### <Third aspect>

The accommodation apparatus 100A or 100D according to the present aspect is characterized in that the accommodation units 10 to 40 or 10D to 40D include, as the coupled portion to be coupled to the shaft member 80A or 80D, the female screw portions 16a to 46a each provided with a female screw on the inner peripheral surface thereof or the male screw members 16D to 46D each provided with a male screw on the outer peripheral surface thereof, and that the shaft member 80A or 80D includes the male screw portion 82 provided with a male screw on the outer peripheral surface thereof or the female screw portion 82D provided with a female screw on the inner peripheral surface thereof.

According to the accommodation apparatus 100A or 100D of the present aspect, coupling of each of the accommodation units 10 to 40 or 10D to 40D and the shaft member 80A or 80D can be achieved by a combination of the male screw and the female screw. Accordingly, even at extremely low temperatures, each of the accommodation units 10 to 40 or 10D to 40D and the shaft member 80A or 80D can be coupled to each other without fail.

### <Fourth aspect>

The accommodation apparatus 100B according to the present aspect is characterized in that the first accommodation unit 10B includes the lower protruding piece 16 (the first fixing piece) to which the first female screw member 16B is fixed, the second accommodation unit 20B includes the lower protruding piece 26 (the second fixing piece) to which the second female screw member 26B is fixed, each of the female screw members 16B and 26B (the coupled portion) is provided with the female screw 162 on the inner peripheral surface thereof and is fixed with the lower end of the female screw 162 open, and the shaft member 80A includes the male screw portion 82 provided with a male screw on the outer peripheral surface thereof.

According to the accommodation apparatus 100B of the present aspect, even if the male screw portion 82 of the shaft member 80A is strongly fastened to each of the female screw members 16B and 26B, the inconvenience that the female screw member 16B or 26B is detached from the lower protruding piece 16 or 26 can be prevented because the lower end of the female screw 162 is open.

### <Fifth aspect>

The accommodation apparatus 100C according to the present aspect is characterized in that the first female screw member 16C (the first coupled portion) provided in the first accommodation unit 10C includes a first female screw having an opening at least at the upper end on the inner peripheral surface thereof, the second female screw member 26C (the second coupled portion) provided in the second accommodation unit 20C includes a second female screw penetrating in the axial direction on the inner peripheral surface thereof, the second female screw member 26C is provided at such a position that the second female screw is aligned with the first female screw when the second accommodation unit 20C arranged above the first accommodation unit 10C is viewed from above, and the shaft member 80C includes the male screw portion 82C provided with a male screw on the outer peripheral surface thereof, the male screw being capable of being coupled to the first female screw and the second female screw.

According to the accommodation apparatus 100C of the present aspect, when the male screw portion 82C included in the shaft member 80C is coupled to each of the first female screw member 16C and the second screw member 26C, both the first accommodation unit 10C and the second accommodation unit 20C can be taken out from the storage space SP323.

When the male screw portion 82C is caused to be coupled to the second female screw member 26C and is caused not to be coupled to the first female screw member 16C, the second accommodation unit 20C can be taken out while the first accommodation unit 10C is left in the storage space SP323.

### <Sixth aspect>

The present aspect provides the accommodation apparatus 100E for a freezing target including the accommodation unit group 1E accommodating a freezing target group and the shaft portions 80E1 to 80E4 partly coupled to the respective accommodation units 10E to 40E, in which each of the accommodation units 10E to 40E is put into and taken out from inside of the freezing container 300 by using the shaft portions 80E1 to 80E4, and is characterized in that: the accommodation units 10E to 40E include the first accommodation unit 10E (the first accommodation unit) accommodating the first freezing target 91 and the second accommodation unit 20E (the second accommodation unit) accommodating the second freezing target 92 and arranged above the first accommodation unit 10E in a state of being stored in the freezing container 300; the upper end portion of the first shaft portion 80E1 protrudes above the second accommodation unit 20E in a state where the first accommodation unit 10E and the second accommodation unit 20E are stored in the freezing container 300; and the accommodation apparatus 100E has a configuration in which, in a state where the second accommodation unit 20E is arranged above the first accommodation unit 10E, the first accommodation unit 10E and the second accommodation unit 20E are taken out collectively by pulling up the first shaft portion 80E1.

According to the accommodation apparatus 100E of the present aspect, by pulling up the first shaft portion 80E1 in the state where the second accommodation unit 20E is arranged above the first accommodation unit 10E in the storage space SP323, the first and second accommodation units 10E and 20E can be taken out collectively from the storage space SP323, and by pulling up the second shaft portion 80E2, the second accommodation unit 20E can be taken out while the first accommodation unit 10E is left in the storage space SP323.

As described above, the accommodation units 10E and 20E can be stored while being stacked vertically in the storage space SP323. Therefore, it is unnecessary to ensure a passage for the selected accommodation unit 10 in the storage space SP323. Hence, the quantity of the freezing targets 91 and 92 stored in the storage space SP323 can be increased.

### Reference Signs List

1, 1C, 1D, 1E, 1F...accommodation unit group; 10, 10B, 10C, 10D, 10E, 10F...first accommodation unit; 11... bottom plate; 11a...front end part of bottom plate; 11b...fall prevention protrusion; 12...top plate; 12a...front end part of top plate; 13...front plate; 13a...front plate body; 13b...lower end part of front plate; 13c...upper end part; 13d...front notch; 14...back plate; 14a...rear notch; 15...right side plate; 16...lower protruding piece; 16a, 16B...first female screw member; 16D, 26D, 36D, 46D...male screw member; 17...upper protruding piece; 17a...first upper insertion opening; 17b...first positioning protrusion; 20, 20B, 20C, 20D, 20E, 20F...second accommodation unit; 21...bottom plate; 21a...front end part of bottom plate; 21b...fall prevention protrusion; 22...top plate; 22a...front end part of top plate; 23...front plate; 23a...front plate body; 23b...lower end part of front plate; 23c...upper end part of front plate; 23d...front notch; 24...back plate; 24a...rear notch; 25...right side plate; 26...lower protruding piece; 26a, 26B, 26C...second female screw member; 26b...second lower insertion opening; 26c...second positioning void; 27...upper protruding piece; 27al, 27a2, 27a3...second upper insertion opening; 27b...second positioning protrusion; 30, 30C, 30D, 30E, 30F... third accommodation unit; 31... bottom plate; 31a...front end part of bottom plate; 31b...fall prevention protrusion; 32...top plate; 32a...front end part of top plate; 33...front plate; 33a...front plate body; 33b...lower end part of front plate; 33c...upper end part of front plate; 33d...front notch; 34...back plate; 34a...rear notch; 35...right side plate; 36...lower protruding piece; 36a, 36C...third female screw member; 36b1, 36b2...third lower insertion opening; 36c...third positioning void; 37...upper protruding piece; 37a1, 37a2, 37a3...third upper insertion opening; 37b...third positioning protrusion; 40, 40C, 40D, 40E, 40F...fourth accommodation unit; 41...bottom plate; 41a...front end part of bottom plate; 41b...fall prevention protrusion; 42...top plate; 42a...front end part of top plate; 43... front plate; 43a...front plate body; 43b...lower end part of front plate; 43c...upper end part of front plate; 43d...front notch; 44...back plate; 44a...rear notch; 45...right side plate; 46...lower protruding piece; 46a, 46C...fourth female screw member; 46b1, 46b2, 46b3...fourth lower insertion opening; 46c...fourth positioning void; 47...upper protruding piece; 47a1, 47a2, 47a3, 47a4...fourth upper insertion opening; 80A, 80C, 80D...shaft member; 81...shaft body; 82, 82C... male screw portion; 82D...female screw portion; 83...handle; 90...freezing target group; 91...first freezing target; 92...second freezing target; 93...third freezing target; 94... fourth freezing target; 100A...accommodation apparatus according to first embodiment; 100B... accommodation apparatus according to second embodiment; 100C...accommodation apparatus according to third embodiment; 100D...accommodation apparatus according to fourth embodiment; 100E...accommodation apparatus according to fifth embodiment; 100F... accommodation apparatus according to sixth embodiment; 200...pedestal; 201...seat plate; 201a...opening; 201b...seat-plate side insertion opening; 202...leg; 202a...first leg; 202b...second leg; 202b1...bent piece; 203...guide portion; 203a...guide surface; 203b...bent piece; 300... freezing container; 310...container body; 311...outer peripheral wall; 312...inner peripheral wall; 313...partition wall; 314...wave dissipating plate; 315...refrigerant supply pipe; 315a...coupling fitting; 316...opening portion; 317...liquid level gauge; 317a...detector; 318...fixing screw; 400...guide member; 401... guide body; 402...handle; 403... positioning hole; 411, 412, 413, 414...guide groove; SP10...first accommodation space; SP20...second accommodation space; SP30...third accommodation space; SP40...fourth accommodation space; SP321...sealed space; SP322...refrigerant chamber; SP323...storage space; SP324...upper space; OP1... entrance/exit for first freezing target; OP2...entrance/exit for second freezing target; OP3... entrance/exit for third freezing target; OP4...entrance/exit for fourth freezing target; LQN...refrigerant; LQA...liquid air

## Claims

1. An accommodation apparatus for a freezing target, comprising an accommodation unit accommodating a freezing target and a shaft member detachably coupled to the accommodation unit, and having a configuration in which, in a state where the shaft member is coupled to the accommodation unit stored in a freezing container, the accommodation unit is put into and taken out from the freezing container by using the shaft member, wherein
the accommodation unit includes:
a first accommodation unit accommodating a first freezing target and provided with a first coupled portion to which a part of the shaft member is detachably coupled; and
a second accommodation unit accommodating a second freezing target, provided with a second coupled portion to which a part of the shaft member is detachably coupled, and arranged above the first accommodation unit in a state of being stored in the freezing container, and
the accommodation apparatus has a configuration in which, in a state where the second accommodation unit is arranged above the first accommodation unit, the first accommodation unit and the second accommodation unit are taken out collectively by coupling the shaft member to the first coupled portion.

2. The accommodation apparatus for a freezing target according to claim 1, wherein the shaft member has a configuration capable of being coupled to the first coupled portion or the second coupled portion individually and selectively in a state where the second accommodation unit is arranged above the first accommodation unit.

3. The accommodation apparatus for a freezing target according to claim 2, wherein
the first coupled portion and the second coupled portion are each a female screw member provided with a female screw on an inner peripheral surface thereof or a male screw member provided with a male screw on an outer peripheral surface thereof, and
the shaft member includes a male screw portion provided with a male screw on an outer peripheral surface thereof or a female screw portion provided with a female screw on an inner peripheral surface thereof.

4. The accommodation apparatus for a freezing target according to claim 2, wherein
the first accommodation unit includes a first fixing piece to which the first coupled portion is fixed,
the second accommodation unit includes a second fixing piece to which the second coupled portion is fixed,
the first coupled portion and the second coupled portion are female screw members each provided with a female screw on an inner peripheral surface thereof,
the first coupled portion and the second coupled portion are respectively fixed to the first fixing piece and the second fixing piece in a state where a lower end of the female screw is open, and
the shaft member is provided with a male screw portion provided with a male screw on an outer peripheral surface thereof.

5. The accommodation apparatus for a freezing target according to claim 1, wherein
the first coupled portion is a first female screw member provided with a first female screw on an inner peripheral surface thereof, the first female screw having an opening at least at an upper end,
the second coupled portion is a second female screw member provided with a second female screw penetrating therethrough in an axial direction on an inner peripheral surface thereof,
the second female screw member is provided at such a position that the second female screw is aligned with the first female screw when the second accommodation unit arranged above the first accommodation unit is viewed from above, and
the shaft member is provided with a male screw portion provided with a male screw on an outer peripheral surface thereof, the male screw being capable of being coupled to the first female screw and the second female screw.

6. An accommodation apparatus for a freezing target, comprising an accommodation unit accommodating a freezing target and a shaft portion partly coupled to the accommodation unit, the accommodation unit being put into and taken out from inside of a freezing container by using the shaft member, wherein
the accommodation unit includes:
a first accommodation unit accommodating a first freezing target; and
a second accommodation unit accommodating a second freezing target and arranged above the first accommodation unit in a state of being stored in the freezing container,
the shaft portion includes:
a first shaft portion coupled at a lower part to the first accommodation unit and extending upward; and
a second shaft portion coupled at a lower part to the second accommodation unit and extending upward,
an upper end portion of the first shaft portion protrudes above the second accommodation unit in a state where the first accommodation unit and the second accommodation unit are stored in the freezing container, and
the accommodation apparatus has a configuration in which, in a state where the second accommodation unit is arranged above the first accommodation unit, the first accommodation unit and the second accommodation unit are taken out collectively by pulling out the first shaft portion.
